(19) Europäisches Patentamt / European Patent Office / Office européen des brevets

(11) **EP 4 773 534 A1**

(12) **EUROPEAN PATENT APPLICATION**
published in accordance with Art. 153(4) EPC

(43) Date of publication:
08.07.2026 Bulletin 2026/28

(21) Application number: 24870673.1

(22) Date of filing: 24.09.2024

(51) International Patent Classification (IPC):
H04L 1/1812 (2023.01)     H04L 1/1822 (2023.01)
H04L 1/1829 (2023.01)     H04L 1/1867 (2023.01)
H04L 1/00 (2006.01)       H04L 5/00 (2006.01)
H04W 72/0453 (2023.01)    H04W 72/232 (2023.01)

(52) Cooperative Patent Classification (CPC):
H04L 1/1819; H04L 1/0003; H04L 1/0009;
H04L 1/1822; H04L 1/1854; H04L 1/1893;
H04L 1/1896; H04L 5/001; H04L 5/0098;
H04L 1/1861; H04L 5/0055

(86) International application number:
PCT/CN2024/120519

(87) International publication number:
WO 2025/067129 (03.04.2025 Gazette 2025/14)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 28.09.2023 CN 202311286798

(71) Applicant: ZTE Corporation
Shenzhen, Guangdong 518057 (CN)

(72) Inventors:
• KOU, Shuaihua
  Shenzhen, Guangdong 518057 (CN)
• SHI, Jing
  Shenzhen, Guangdong 518057 (CN)
• GOU, Wei
  Shenzhen, Guangdong 518057 (CN)
• HAN, Xianghui
  Shenzhen, Guangdong 518057 (CN)
• WEI, Xingguang
  Shenzhen, Guangdong 518057 (CN)

(74) Representative: Vossius & Partner
Patentanwälte Rechtsanwälte mbB
Siebertstraße 3
81675 München (DE)

(54) **DATA TRANSMISSION METHOD, AND DEVICE AND STORAGE MEDIUM**

(57) Provided are a data transmission method, a device, and a storage medium. The data transmission method applied to a first communication node includes: sending scheduling indication information to a second communication node, where the scheduling indication information is used for indicating resource configuration information corresponding to at least two carriers; and the resource configuration information is used for indicating at least one of the following: activation of semi-persistent transmission, deactivation of semi-persistent transmission, retransmission of semi-persistent transmission, or TCI state update.

> Send scheduling indication information to a second communication node, where the scheduling indication information is used for indicating resource configuration information corresponding to at least two carriers; and the resource configuration information is used for indicating at least one of the following: activation of semi-persistent transmission, deactivation of semi-persistent transmission, retransmission of semi-persistent transmission, or TCI state update — S110

**FIG. 1**

EP 4 773 534 A1

**Description**

TECHNICAL FIELD

The present application relates to the field of communications, for example, a data transmission method, a device, and a storage medium.

BACKGROUND

In multi-carrier aggregation, to reduce the overhead of Downlink Control Information (DCI), one DCI may schedule Physical Downlink Shared Channels (PDSCHs) or Physical Uplink Shared Channels (PUSCHs) on multiple carriers. Pieces of scheduling configuration information for these scheduled PDSCHs or PUSCHs need to be indicated separately, significantly increasing the overhead of DCI. In view of this, how to reduce the overhead of DCI is a problem that needs to be solved urgently.

SUMMARY

In view of this, embodiments of the present application provide a data transmission method, a device, and a storage medium to effectively reduce the overhead of DCI.

An embodiment of the present application provides a data transmission method applied to a first communication node. The data transmission method includes the following.

Scheduling indication information is sent to a second communication node, where the scheduling indication information is used for indicating resource configuration information corresponding to at least two carriers; and the resource configuration information is used for indicating at least one of the following: activation of semi-persistent transmission, deactivation of semi-persistent transmission, retransmission of semi-persistent transmission, or transmission configuration indication (TCI) state update.

An embodiment of the present application provides a data transmission method applied to a second communication node. The data transmission method includes the following.

Scheduling indication information sent by a first communication node is received, where the scheduling indication information is used for indicating resource configuration information corresponding to at least two carriers; and the resource configuration information is used for indicating at least one of the following: activation of semi-persistent transmission, deactivation of semi-persistent transmission, retransmission of semi-persistent transmission, or TCI state update.

First feedback resource corresponding to hybrid automatic repeat request (HARQ) feedback information is configured or a PUSCH is sent according to the scheduling indication information.

An embodiment of the present application provides a communication device. The communication device includes a memory and at least one processor.

The memory is configured to store at least one program.

The at least one processor is configured to perform the data transmission method of any previous embodiment when executing the at least one program.

An embodiment of the present application provides a storage medium storing a computer program which, when executed by a processor, causes the processor to perform the method of any previous embodiment.

BRIEF DESCRIPTION OF DRAWINGS

FIG. 1 is a flowchart of a data transmission method according to an embodiment of the present application.
FIG. 2 is a flowchart of another data transmission method according to an embodiment of the present application.
FIG. 3 is a schematic diagram illustrating an implementation in which DCI activates semi-persistent scheduling physical downlink shared channels (SPS PDSCHs) of a group of cells according to an embodiment of the present application.
FIG. 4 is a schematic diagram illustrating an implementation in which the counter downlink assignment index (DAI) and the total DAI are counted into a Type-2 codebook according to an embodiment of the present application.
FIG. 5 is a schematic diagram illustrating an implementation in which DCI deactivates SPS PDSCHs of multiple cells according to an embodiment of the present application.
FIG. 6 is a schematic diagram illustrating an implementation in which the counter DAI and the total DAI are counted into another Type-2 codebook according to an embodiment of the present application.

FIG. 7 is a block diagram of a data transmission apparatus according to an embodiment of the present application.

FIG. 8 is a block diagram of another data transmission apparatus according to an embodiment of the present application.

FIG. 9 is a diagram illustrating the structure of a communication device according to an embodiment of the present application.

DETAILED DESCRIPTION

The embodiments of the present application are described hereinafter in conjunction with the drawings. The present application is described hereinafter in conjunction with embodiments and the drawings. The examples described hereinafter are intended to explain the present application and not to limit the scope of the present application.

In the present application, the backgrounds, conditions, circumstances, options, examples, and methods described in the same or different embodiments may be freely combined.

It is to be noted that in the embodiments of the present application, a first communication node may be a base station, and a second communication node may be a terminal, also known as a User Equipment (UE).

In some examples, the base station configures at least one cell group for the UE. The cell group includes one or more serving cells. The base station sends DCI to the UE, and the DCI can schedule uplink or downlink transmissions on one or more cells within the cell group.

In some embodiments, the base station configures at least one cell for the UE, where the cell includes one or more uplink carriers and/or one or more downlink carriers. The base station sends DCI to the UE, and the DCI can schedule uplink transmissions on one or more uplink carriers in the cell and/or schedule downlink transmissions on one or more downlink carriers in the cell. In the embodiments of the present application, the solutions in all the embodiments may be used in a scenario where at least one cell group is configured for the UE or in a scenario where at least one cell is configured for the UE and the cell includes one or more uplink carriers and/or one or more downlink carriers. For ease of description, the scenario where at least one cell is configured for the UE and the cell includes one or more uplink carriers and/or one or more downlink carriers is described in the embodiment of the present application. When the embodiment is applied to a scenario where at least one cell group is configured for the UE, the carrier in the embodiment needs to be replaced with the serving cell, and the cell in the embodiment needs to be replaced with the cell group.

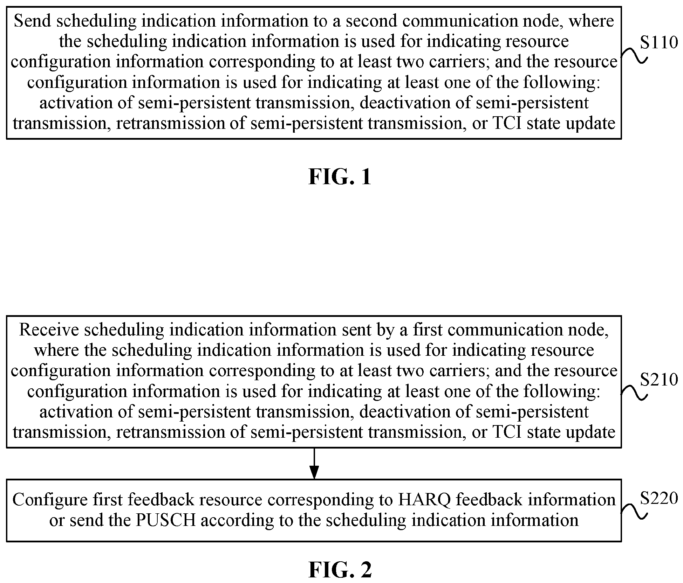

In an embodiment, FIG. 1 is a flowchart of a data transmission method according to an embodiment of the present application. This embodiment is applied to a case where multiple carriers are jointly scheduled. This embodiment may be implemented by a first communication node. The first communication node may also be referred to as a first communication device. For example, the first communication node may be the base station.

As shown in FIG. 1, this embodiment includes S110.

In S110, scheduling indication information is sent to a second communication node, where the scheduling indication information is used for indicating resource configuration information corresponding to at least two carriers; and the resource configuration information is used for indicating at least one of the following: activation of semi-persistent transmission, deactivation of semi-persistent transmission, retransmission of semi-persistent transmission, or TCI state update.

In multi-carrier aggregation, the scheduling indication information may be DCI. In multi-carrier aggregation, the first communication node may send the resource configuration information corresponding to at least two carriers to the second communication node. In this manner, at least one of activation of semi-persistent transmission, deactivation of semi-persistent transmission, retransmission of semi-persistent transmission, TCI state update, or dynamic scheduling can be performed simultaneously on multiple carriers, thereby reducing the overhead of the scheduling indication information.

In an embodiment, the resource configuration information includes at least one of the following parameters: a bandwidth part (BWP) indication, a new data indicator (NDI), a redundancy version (RV), an HARQ process number (HPN), a Modulation and Coding Scheme (MCS), a frequency domain resource allocation (FDRA) field, or a time domain resource allocation (TDRA) field. In an example, the resource configuration information may also be understood as scheduling-related information. The scheduling indication information may include multiple pieces of resource configuration information, and the resource configuration information may be indicated by at least one of the following information fields: a BWP indication, an FDRA field, a TDRA field, an RV, an NDI, an MCS, or an HPN. For some resource configuration information, in the case where multiple carriers are scheduled, the transmissions on the multiple carriers may be indicated by multiple fields, respectively, that is, the scheduling indication information may include multiple identical fields. In an example, each field corresponds to one carrier. For example, TDRA is used as an example. Assuming that one cell includes four carriers and the scheduling indication information schedules three carriers, namely carrier 1, carrier 2, and carrier 4, then the scheduling indication information includes three TDRA fields. The first TDRA field corresponds to the first carrier and indicates the time domain resources on the first carrier; the second TDRA field corresponds to the second carrier and indicates the time domain resources on the second carrier; and the third TDRA field corresponds to the fourth carrier and indicates the time domain resources on the fourth carrier. In an example, each field corresponds to one carrier in the cell. For example, if one cell includes four carriers, the first TDRA field corresponds to the first carrier and indicates the time domain resources on the first carrier, the second TDRA field corresponds to the second carrier and indicates the time domain resources on the second carrier, the third TDRA field corresponds to the third carrier and indicates the time domain resources on the third carrier, and the fourth TDRA field corresponds to the fourth carrier and indicates the time domain resources on the fourth carrier.

In an embodiment, the Cyclic Redundancy Check (CRC) of the scheduling indication information is scrambled by a first Radio Network Temporary Identifier (RNTI).

In the case where the scheduling indication information is used for scheduling downlink transmission resources, the scheduling indication information is used for at least one of the following operations: activating SPS PDSCH transmission, deactivating SPS PDSCH transmission, scheduling PDSCH retransmission, indicating a TCI state update for a carrier, or indicating that no transmission exists on a carrier. For downlink transmission, the scheduling indication information may schedule one or more carriers. For each scheduled carrier, the scheduling indication information may activate the SPS PDSCH, deactivate the SPS PDSCH, schedule at least one PDSCH, indicate a TCI state update, or indicate that no transmission exists. In an example, scheduling at least one PDSCH may be the SPS PDSCH retransmission.

In an embodiment, in the case where the scheduling indication information is used for activating SPS PDSCH transmission of a carrier, the NDI, RV, or HPN of the carrier is set to a first predefined value. In an example, in the case where the scheduling indication information is used for activating SPS PSDSCH transmission of a certain carrier, the NDI corresponding to the carrier in the scheduling indication information is set to the first predefined value; the bits of the RV corresponding to the carrier in the scheduling indication information are each set to the first predefined value; or the bits of the HPN corresponding to the carrier in the scheduling indication information are each set to the first predefined value, or the HPN corresponding to the carrier indicates the index of the semi-persistent scheduling (SPS) to be activated. For example, the first predefined value may be 0.

In an embodiment, in the case where the scheduling indication information is used for deactivating SPS PDSCH transmission of a carrier, the NDI, RV, or HPN of the carrier is set to the first predefined value, the MCS of the carrier is set to a second predefined value, and the FDRA of the carrier is set to a third predefined value. In an example, in the case where the scheduling indication information is used for deactivating SPS PSDSCH transmission of a certain carrier, the NDI corresponding to the carrier in the scheduling indication information is set to the first predefined value; the bits of the RV corresponding to the carrier in the scheduling indication information are each set to the first predefined value; or the bits of the HPN corresponding to the carrier in the scheduling indication information are each set to the first predefined value, or the HPN corresponding to the carrier indicates the index of the SPS to be deactivated. For example, the first predefined value may be 0. Moreover, the MCS corresponding to the carrier in the scheduling indication information is set to the second predefined value. For example, the bits of the MCS are each set to 1. The FDRA field corresponding to the carrier in the scheduling indication information is set to the third predefined value. For example, when the FDRA manner is dynamic switching or Type-0, the values of the FDRA field are each set to 0; when the FDRA manner is Type-1, the values of the FDRA field are each set to 1.

In an embodiment, in the case where the scheduling indication information is used for indicating PDSCH retransmission of a carrier, the NDI of the carrier is set to the second predefined value. PDSCH retransmission is SPS PDSCH retransmission. In an example, in the case where the scheduling indication information is used for scheduling PDSCH retransmission of a certain carrier, the value of the NDI corresponding to the carrier in the scheduling indication information is set to the second predefined value. For example, the second predefined value may be 1.

In an embodiment, in the case where the scheduling indication information is used for indicating a TCI state update for a carrier, the NDI of the carrier is set to the first predefined value, the RV or MCS of the carrier is set to the second predefined value, and the FDRA of the carrier is set to the third predefined value. In an example, in the case where the scheduling indication information is used for indicating a TCI state update for a certain carrier, the value of the NDI corresponding to the carrier in the scheduling indication information is set to the first predefined value (for example, the first predefined value may be 0); the bits of the RV corresponding to the carrier in the scheduling indication information are each set to the second predefined value; or the bits of the MCS corresponding to the carrier in the scheduling indication information are each set to the second predefined value (for example, the second predefined value may be 1). The FDRA field corresponding to the carrier in the scheduling indication information is set to the third predefined value. For example, when the FDRA manner is dynamic switching or Type-0, the values of the FDRA field are each set to 0; when the FDRA manner is Type-1, the values of the FDRA field are each set to 1.

In an embodiment, when the scheduling indication information is used for indicating that no transmission exists on a carrier, the FDRA of the carrier is set to the third predefined value, and the NDI, RV, HPN, and MCS of the carrier are each set to a fourth predefined value. The fourth predefined value is different from the predefined values for SPS PDSCH activation, SPS PDSCH deactivation, SPS PDSCH retransmission, and a TCI state update. In an example, in the case where the scheduling indication information is used for indicating that no transmission exists on a certain carrier, the FDRA field corresponding to the carrier in the scheduling indication information is set to the third predefined value. For example, when the FDRA manner is dynamic switching or Type-0, the values of the FDRA field are each set to 0; when the FDRA manner is Type-1, the values of the FDRA field are each set to 1. The NDI, RV, HPN, and MCS corresponding to the carrier are each set to the fourth predefined value, which is different from the predefined values corresponding to SPS PDSCH activation, SPS PDSCH deactivation, SPS PDSCH retransmission, and a TCI state update. The fourth predefined value of scheduling-related information indicating that no transmission exists is different from at least one of the predefined values of scheduling-related information during SPS PDSCH activation, is different from at least one of the predefined values of scheduling-related information during SPS PDSCH deactivation, is different from at least one of the predefined values of scheduling-related information during SPS PDSCH retransmission, and is different from at least one of the predefined values of scheduling-related information during a TCI state update.

In an embodiment, the data transmission method applied to the first communication node further includes: receiving HARQ feedback information sent by the second communication node on a first feedback resource, where a time domain position of the first feedback resource is determined by a first time domain position and a first time domain interval, and the first time domain interval is indicated by the scheduling indication information or configured by the first communication node. In an example, the first time domain interval may be the interval between the PDSCH and the Physical Uplink Control Channel (PUCCH). The first feedback resource refers to the resource for carrying the HARQ feedback information (also simply referred to as HARQ information) for PDSCH transmission. For example, the first feedback resource may be the PUCCH, and the time domain position of the first feedback resource may be the slot where the PUCCH is located. After receiving the scheduling indication information, the second communication node decodes the SPS PDSCH and/or at least one scheduled PDSCH. The second communication node generates the HARQ feedback information for the scheduling indication information or the PDSCH (including the SPS PDSCH and/or at least one scheduled PDSCH), and then the second communication node sends the corresponding HARQ feedback information to the first communication node.

In an embodiment, the first time domain position includes at least one of the following: a time domain position of the SPS PDSCH with the latest ending symbol among at least one activated SPS PDSCH, a time domain position of the SPS PDSCH with the latest ending symbol among at least one deactivated SPS PDSCH, a time domain position of the PDSCH with the latest ending symbol among at least one scheduled PDSCH, or a time domain position of the scheduling indication information. In an example, for the case where the scheduling indication information activates the SPS PDSCH of one or more carriers, the time domain position of the first feedback resource may be determined according to the time domain position of the SPS PDSCH with the latest ending symbol among the at least one activated SPS PDSCH and the first time domain interval. In an example, for the case where the scheduling indication information deactivates the SPS PDSCH of one or more carriers, the time domain position of the first feedback resource may be determined according to the time domain position of the SPS PDSCH with the latest ending symbol among the at least one deactivated SPS PDSCH and the first time domain interval. In an example, for the case where the scheduling indication information indicates that no transmission exists on a carrier or indicates a TCI state update, the time domain position of the first feedback resource may be determined according to the time domain position of the scheduling indication information and the first time domain interval. In an example, for the case where the scheduling indication information schedules the PDSCH of one or more carriers, that is, the PDSCHs are retransmissions of SPS PDSCHs, the time domain position of the first feedback resource may be determined according to the time domain position of the PDSCH with the latest ending symbol among the at least one scheduled PDSCH and the first time domain interval.

In an embodiment, in the case where the scheduling indication information is used for deactivating SPS PDSCH transmission of at least one carrier, the position of the HARQ feedback information in the first type codebook is determined by at least one of the SPS PDSCH with the smallest carrier index among the deactivated SPS PDSCHs or the time domain position of the scheduling indication information.

In an embodiment, in the case where the scheduling indication information is used for deactivating SPS PDSCH transmission of at least one carrier, the position of the HARQ feedback information in the first type codebook is determined by the time domain position of the PDSCH on the carrier with the smallest carrier index among the at least one deactivated carrier, where the PDSCH on the carrier with the smallest carrier index is indicated by the TDRA field in the scheduling indication information.

In an embodiment, the first type codebook is generated using the pre-expanded time domain interval set. In an example, the first type codebook may be a Type-1 codebook, and the time domain interval set may also be referred to as a slot interval set. The second communication node may expand the time domain interval set and then use the expanded time domain interval set to generate the first type codebook.

In an embodiment, for the second type codebook, the scheduling indication information is used for indicating the counter DAI and the total DAI.

The HARQ feedback information is generated according to the order of the counter DAI.

The counter DAI is the cumulative number of pieces of scheduling indication information up to the current Physical Downlink Control Channel (PDCCH) detection occasion and the current carrier or the cumulative number of combinations of scheduling indication information and carriers.

The total DAI is the total number of pieces of scheduling indication information up to the current PDCCH detection occasion or the total number of combinations of scheduling indication information and carriers.

In an embodiment, in the case where the scheduling indication information schedules one or more carriers and any one of the one or more carriers corresponds to the activated SPS PDSCH or no transmission, the scheduling indication information is skipped when the counter DAI or the total DAI is counted.

In an embodiment, for the second type codebook, in the case where the scheduling indication information deactivates the SPS PDSCH of a carrier, schedules SPS PDSCH retransmission, or indicates a TCI state update for a carrier and at least two carriers exist, the counter DAI or the total DAI is counted into a sub-codebook for the scheduling indication information scheduling multiple PDSCHs.

When one carrier exists, the counter DAI or the total DAI is counted into a sub-codebook for the scheduling indication information scheduling one PDSCH.

In an embodiment, in the case where the scheduling indication information is used for scheduling uplink transmission resources, the scheduling indication information is used for at least one of the following operations: activating configured grant physical uplink shared channel (CG PUSCH) transmission, deactivating CG PUSCH transmission, scheduling CG PUSCH retransmission, or indicating that no transmission exists on a carrier. Scheduling CG PUSCH refers to CG PUSCH retransmission.

In an embodiment, FIG. 2 is a flowchart of another data transmission method according to an embodiment of the present application. This embodiment is applied to a case where multiple carriers are jointly scheduled. This embodiment may be implemented by a second communication node. The second communication node may also be referred to as a second communication device. For example, the second communication node may be a terminal. As shown in FIG. 2, this embodiment includes S210 and S220.

In S210, scheduling indication information sent by a first communication node is received, where the scheduling indication information is used for indicating resource configuration information corresponding to at least two carriers; and the resource configuration information is used for indicating at least one of the following: activation of semi-persistent transmission, deactivation of semi-persistent transmission, retransmission of semi-persistent transmission, or TCI state update.

In S220, first feedback resource corresponding to HARQ feedback information is configured or the PUSCH is sent according to the scheduling indication information.

In an embodiment, the resource configuration information includes at least one of the following parameters: a BWP indication, an NDI, an RV, an HPN, an MCS, an FDRA field, or a TDRA field.

In an embodiment, the CRC of the scheduling indication information is scrambled by a first RNTI.

In the case where the scheduling indication information is used for scheduling downlink transmission resources, the scheduling indication information is used for at least one of the following operations: activating SPS PDSCH transmission, deactivating SPS PDSCH transmission, scheduling PDSCH retransmission, indicating a TCI state update for a carrier, or indicating that no transmission exists on a carrier.

In an embodiment, in the case where the scheduling indication information is used for activating SPS PDSCH transmission of a carrier, the NDI, RV, or HPN of the carrier is set to a first predefined value.

In an embodiment, in the case where the scheduling indication information is used for deactivating SPS PDSCH transmission of a carrier, the NDI, RV, or HPN of the carrier is set to the first predefined value, the MCS of the carrier is set to a second predefined value, and the FDRA of the carrier is set to a third predefined value.

In an embodiment, in the case where the scheduling indication information is used for indicating PDSCH retransmission of a carrier, the NDI of the carrier is set to the second predefined value.

In an embodiment, in the case where the scheduling indication information is used for indicating a TCI state update for a carrier, the NDI of the carrier is set to the first predefined value, the RV or MCS of the carrier is set to the second predefined value, and the FDRA of the carrier is set to the third predefined value.

In an embodiment, when the scheduling indication information is used for indicating that no transmission exists on a carrier, the FDRA of the carrier is set to the third predefined value, and the NDI, RV, HPN, and MCS of the carrier are each set to a fourth predefined value. The fourth predefined value is different from the predefined values for SPS PDSCH activation, SPS PDSCH deactivation, SPS PDSCH retransmission, and a TCI state update.

In an embodiment, the data transmission method applied to the second communication node further includes: sending HARQ feedback information to the second communication node on a first feedback resource, where a time domain position of the first feedback resource is determined by a first time domain position and a first time domain interval, and the first time domain interval is indicated by the scheduling indication information or configured by the first communication node.

In an embodiment, the first time domain position includes at least one of the following: a time domain position of the SPS PDSCH with the latest ending symbol among at least one activated SPS PDSCH, a time domain position of the SPS PDSCH with the latest ending symbol among at least one deactivated SPS PDSCH, a time domain position of the PDSCH with the latest ending symbol among at least one scheduled PDSCH, or a time domain position of the scheduling indication information.

In an embodiment, in the case where the scheduling indication information is used for deactivating SPS PDSCH transmission of at least one carrier, the position of the HARQ feedback information in the first type codebook is determined by at least one of the SPS PDSCH with the smallest carrier index among the deactivated SPS PDSCHs or the time domain position of the scheduling indication information.

In an embodiment, in the case where the scheduling indication information is used for deactivating SPS PDSCH transmission of at least one carrier, the position of the HARQ feedback information in the first type codebook is determined by the time domain position of the PDSCH on the carrier with the smallest carrier index among the at least one deactivated carrier, where the PDSCH on the carrier with the smallest carrier index is indicated by the TDRA field in the scheduling indication information.

In an embodiment, the first type codebook is generated using the pre-expanded time domain interval set.

In an embodiment, for the second type codebook, the scheduling indication information is used for indicating the counter DAI and the total DAI.

The HARQ feedback information is generated according to the order of the counter DAI.

The counter DAI is the cumulative number of pieces of scheduling indication information up to the current PDCCH detection occasion and the current carrier or the cumulative number of combinations of scheduling indication information and carriers.

The total DAI is the total number of pieces of scheduling indication information up to the current PDCCH detection occasion or the total number of combinations of scheduling indication information and carriers.

In an embodiment, in the case where the scheduling indication information schedules one or more carriers and any one of the one or more carriers corresponds to the activated SPS PDSCH or no transmission, the scheduling indication information is skipped when the counter DAI or the total DAI is counted.

In an embodiment, for the second type codebook, in the case where the scheduling indication information deactivates the SPS PDSCH of a carrier, schedules SPS PDSCH retransmission, or indicates a TCI state update for a carrier and at least two carriers exist, the counter DAI or the total DAI is counted into a sub-codebook for the scheduling indication information scheduling multiple PDSCHs.

When one carrier exists, the counter DAI or the total DAI is counted into a sub-codebook for the scheduling indication information scheduling one PDSCH.

In an embodiment, in the case where the scheduling indication information is used for scheduling uplink transmission resources, the scheduling indication information is used for at least one of the following operations: activating CG PUSCH transmission, deactivating CG PUSCH transmission, scheduling CG PUSCH retransmission, or indicating that no transmission exists on a carrier.

It is to be noted that, for the descriptions of the scheduling indication information, the resource configuration information, the first time domain position, and other parameters involved in the data transmission method applied to the second communication node, reference is made to the corresponding parameters in the data transmission method applied to the first communication node. The details are not repeated here.

In the following embodiments, the scenario where at least one cell group is configured for the UE, the first communication node is the base station, and the second communication node is the UE is used as an example to describe the process in which DCI joint schedules multiple cells and the HARQ feedback process during joint scheduling. When the following embodiments are applied to the scenario where at least one cell is configured for the UE and the cell includes one or more uplink carriers and/or one or more downlink carriers, the cells in the embodiments need to be replaced with the carriers, and the cell groups in the embodiments need to be replaced with the cells.

Embodiment one

In an embodiment, the CRC of the DCI may be scrambled by a special RNTI, such as the configured scheduling RNTI (CS-RNTI). For downlink transmission, the DCI schedules one or more cells in the cell group. For each scheduled cell, the DCI may activate the SPS PDSCH, deactivate the SPS PDSCH, schedule at least one PDSCH, indicate a TCI state update, or indicate that no transmission exists. The scheduled PDSCH is a retransmission or a new transmission of the SPS PDSCH. After receiving the DCI, the UE decodes the SPS PDSCH and/or at least one scheduled PDSCH. The UE generates HARQ information bits for the DCI or the PDSCH (including the SPS PDSCH and/or the scheduled PDSCH). The UE sends the generated HARQ information to the base station.

The DCI includes at least a scheduling cell indicator field for indicating which cells are scheduled. In an example, the base station configures one or more combinations of scheduled cells by using Radio Resource Control (RRC) signaling, and each combination includes one or more scheduled cells. Then, the DCI indicates a combination among the one or more combinations of scheduled cells, and the cells included in the indicated combination are scheduled by the DCI. For example, the cell group includes 4 cells, namely cell 1, cell 2, cell 3, and cell 4. The combinations of scheduled cells configured by RRC are shown in Table 1. The first combination includes cell 1 and cell 3, the second combination includes cell 2 and cell 4, the third combination includes cell 3, and the fourth combination includes cell 1, cell 2, cell 3, and cell 4. In the DCI, the scheduling cell indicator field includes two bits, where '00' represents the first combination, meaning that cell 1 and cell 3 are scheduled; '01' represents the second combination, meaning that cell 2 and cell 4 are scheduled; '10' represents the third combination, meaning that cell 3 is scheduled; and '11' represents the fourth combination, meaning that cell 1, cell 2, cell 3, and cell 4 are scheduled.

Table 1. The configuration table for cells included in the combinations of scheduled cells

| First combination | Cell 1 and cell 3 |
|---|---|
| Second combination | Cell 2 and cell 4 |
| Third combination | Cell 3 |
| Fourth combination | Cell 1, cell 2, cell 3, and cell 4 |

The DCI includes multiple pieces of scheduling-related information. The scheduling-related information is indicated by at least one of the following information fields: a BWP indication, an FDRA field, a TDRA field, an RV, an NDI, an MCS, or an HPN.

For some scheduling-related information, transmissions on multiple scheduled cells are indicated by multiple fields, respectively. In other words, the DCI includes multiple identical fields, where each field corresponds to a scheduled cell. For example, the DCI includes an FDRA field, an RV, an NDI, an MCS, or an HPN. FDRA is used as an example. The cell group includes four cells, and the DCI schedules three cells, namely cell 1, cell 2, and cell 4. Therefore, the DCI includes three frequency domain resource indicator fields. The first frequency domain resource indicator field corresponds to the first cell, and the first frequency domain resource indicator field indicates the frequency domain resources on the first cell; the second frequency domain resource indicator field corresponds to the second cell, and the second frequency domain resource indicator field indicates the frequency domain resources on the second cell; and the third frequency domain resource indicator field corresponds to the fourth cell, and the third frequency domain resource indicator field indicates the frequency domain resources on the fourth cell. In another condition, each field corresponds to one cell in the cell group. If the cell group includes four cells, the first frequency domain resource indicator field corresponds to the first cell and indicates the frequency domain resources on the first cell; and the second frequency domain resource indicator field corresponds to the second cell and indicates the frequency domain resources on the second cell. Similarly, the fourth frequency domain resource indicator field corresponds to the fourth cell and indicates the frequency domain resources on the fourth cell.

When the DCI activates SPS PDSCH transmission of a certain scheduled cell, the value of the NDI corresponding to the cell in the DCI is set to the first predefined value. In an example, the NDI is set to 0. In an example, the RV corresponding to the cell in the DCI is set to the first predefined value. For example, the bits of the RV are each set to 0. In an example, the HPN corresponding to the cell in the DCI is set to the first predefined value. For example, the bits of the HPN are each set to 0, or the HPN corresponding to the cell indicates the index of the SPS to be activated. In other words, the field corresponding to the cell in the DCI is set to the corresponding value to indicate that the DCI has activated the SPS PDSCH transmission of the cell.

When the DCI deactivates SPS PDSCH transmission of a certain scheduled cell, the value of the NDI corresponding to the cell in the DCI is set to the first predefined value. In an example, the NDI is set to 0. In an example, the RV corresponding to the cell in the DCI is set to the first predefined value. For example, the bits of the RV are each set to 0. In an example, the HPN corresponding to the cell in the DCI is set to the first predefined value. For example, the bits of the HPN are each set to 0, or the HPN corresponding to the cell indicates the index of the SPS to be deactivated. Optionally, the MCS corresponding to the cell in the DCI is set to the second predefined value. For example, the bit values of the MCS are each set to 1. The FDRA field corresponding to the cell in the DCI is set to the third predefined value. In an example, if the FDRA manner is dynamic switching or Type-0, the values of the FDRA are each set to 0; and if the FDRA manner is Type-1, the values of the FDRA are each set to 1. In other words, the field corresponding to the cell in the DCI is set to the corresponding value to indicate that the DCI has deactivated the SPS PDSCH transmission of the cell.

When the DCI schedules SPS PDSCH retransmission of a certain scheduled cell, the value of the NDI corresponding to the cell in the DCI is set to the second predefined value. In an example, the NDI is set to 1. In an example, the FDRA field corresponding to the cell in the DCI cannot be set to the third predefined value. In an example, if the FDRA manner is dynamic switching or Type-0, the values of the FDRA cannot be all zeros; and if the FDRA manner is Type-1, the values of the FDRA cannot be all ones. In other words, the field corresponding to the cell in the DCI is set to the corresponding value to indicate that the DCI has scheduled the SPS PDSCH retransmission of the cell.

When the DCI indicates a TCI state update of a certain scheduled cell, the value of the NDI corresponding to the cell in the DCI is set to the first predefined value. In some embodiments, the NDI is set to 0. In an example, the RV corresponding to the cell in the DCI is set to the second predefined value. For example, the bits of the RV are each set to 1. In an example, the MCS corresponding to the cell in the DCI is set to the second predefined value. For example, the bit values of the MCS are each set to 1. The FDRA field corresponding to the cell in the DCI is set to the third predefined value. In an example, if the FDRA manner is dynamic switching or Type-0, the values of the FDRA are each set to 0; and if the FDRA manner is Type-1, the values of the FDRA are each set to 1. In other words, the field corresponding to the cell in the DCI is set to the corresponding value to indicate that the DCI has indicated the TCI state of the cell.

When the DCI indicates that no transmission exists on a certain scheduled cell, the FDRA field corresponding to the cell in the DCI is set to the third predefined value. If the FDRA manner is dynamic switching or Type-0, the values of the FDRA are each set to 0; and if the FDRA manner is Type-1, the values of the FDRA are each set to 1. The corresponding NDI, and/or RV, and/or HPN, and/or MCS of the cell are set to predefined values. The predefined value in the DCI indicating that no transmission exists is different from at least one of the predefined values for SPS PDSCH activation, SPS PDSCH deactivation, SPS PDSCH retransmission, and a TCI state update. For example, the NDI is set to the second predefined value. That is, the predefined value of scheduling-related information indicating that no transmission exists is different from at least one of the predefined values of scheduling-related information during SPS PDSCH activation, is different from at least one of the predefined values of scheduling-related information during SPS PDSCH deactivation, is different from at least one of the predefined values of scheduling-related information during SPS PDSCH retransmission, and is different from at least one of the predefined values of scheduling-related information during a TCI state update. In an example, the NDI is set to 1.

Compared with SPS PDSCH activation, when the SPS PDSCH is activated, the NDI is set to 0; and when it is indicated that there is no transmission, the NDI is set to 1. The predefined value of the NDI indicating that no transmission exists is different from the predefined value of the NDI during SPS PDSCH activation.

Compared with SPS PDSCH deactivation, when the SPS PDSCH is deactivated, the NDI is set to 0; and when it is indicated that there is no transmission, the NDI is set to 1. The predefined value of the NDI indicating that no transmission exists is different from the predefined value of the NDI during SPS PDSCH activation.

Compared with SPS PDSCH retransmission, the FDRA field in the SPS PDSCH retransmission cannot be set to the third predefined value; and when there is no transmission, the FDRA field is set to the third predefined value. The value of the FDRA field indicating that no transmission exists is different from the value of the FDRA field for SPS PDSCH retransmission.

Compared with the TCI state update, the NDI is set to 0 during the TCI state update, and the NDI is set to 1 when it is indicated that there is no transmission. The predefined value of the NDI indicating that no transmission exists is different from the predefined value of the NDI during SPS PDSCH activation.

Scheduling case 1

The DCI schedules one or more cells, and the DCI activates the SPS PDSCH of the one or more cells. The fields corresponding to these cells are configured according to the preceding embodiments. In an example, the DCI may indicate that no transmission exists on at least one of the cells, and the corresponding field is configured according to the preceding embodiments.

The slot where the PUCCH is located is determined according to the SPS PDSCH with the latest ending symbol among the activated SPS PDSCHs and the interval between the PDSCH and the PUCCH. In some embodiments, if the SPS PDSCH with the latest ending symbol is located in slot n or the last symbol of the SPS PDSCH with the latest ending symbol is located in slot n, then the PUCCH is located in slot n+k, where the interval between the PDSCH and the PUCCH is k slots. The interval between the PDSCH and the PUCCH is indicated by the DCI. Alternatively, if the indicator field does not exist in the DCI, the interval between the PDSCH and the PUCCH is indicated by RRC signaling. The PUCCH carries the HARQ feedback of the activated SPS PDSCH. The interval between the SPS PDSCH (that is, the SPS PDSCH other than the SPS PDSCH with the latest ending symbol) and the PUCCH is determined by the SPS PDSCH and the slot where the PUCCH is located.

The UE generates HARQ information bits for these SPS PDSCHs. The UE concatenates the HARQ information bits corresponding to the SPS PDSCHs in a cell according to the ascending (or descending) order of SPS indices, and then the UE concatenates the hybrid automatic repeat request acknowledgment (HARQ-ACK) information bits of the SPS PDSCHs in multiple cells according to the ascending (or descending) order of cell indices. The PUCCHs carrying HARQ feedback of these SPS PDSCHs are in the same slot.

For the Type-2 codebook, the DCI includes (or indicates) the counter DAI and/or the total DAI. The counter DAI is counted in the ascending order of the indices of the scheduled cells and then counted in the ascending order of the indices of the PDCCH detection occasions. When the UE may receive multiple PDCCHs or PDSCHs in a PDCCH detection occasion index of a scheduled cell, the counter DAI is sorted according to the starting time of PDSCH reception in the scheduled cell and in the PDCCH detection occasion. For a certain piece of DCI, the counter DAI is the cumulative number of pieces of scheduling indication information up to the current PDCCH detection occasion and the current carrier or the cumulative number of combinations of scheduling indication information and carriers. The UE generates the corresponding HARQ information bits according to the order of the counter DAI, and the total length of the HARQ-ACK information bits is determined according to the counter DAI or the total DAI. The DCI that activates the SPS PDSCHs of one or more cells is not counted into the counter DAI. In other words, the DCI is skipped when the counter DAI is counted.

The total DAI is the number of all pieces of DCI or combinations of pieces of DCI and serving cells up to the current PDCCH detection occasion. The DCI that activates the SPS PDSCHs of one or more cells is not counted into the total DAI.

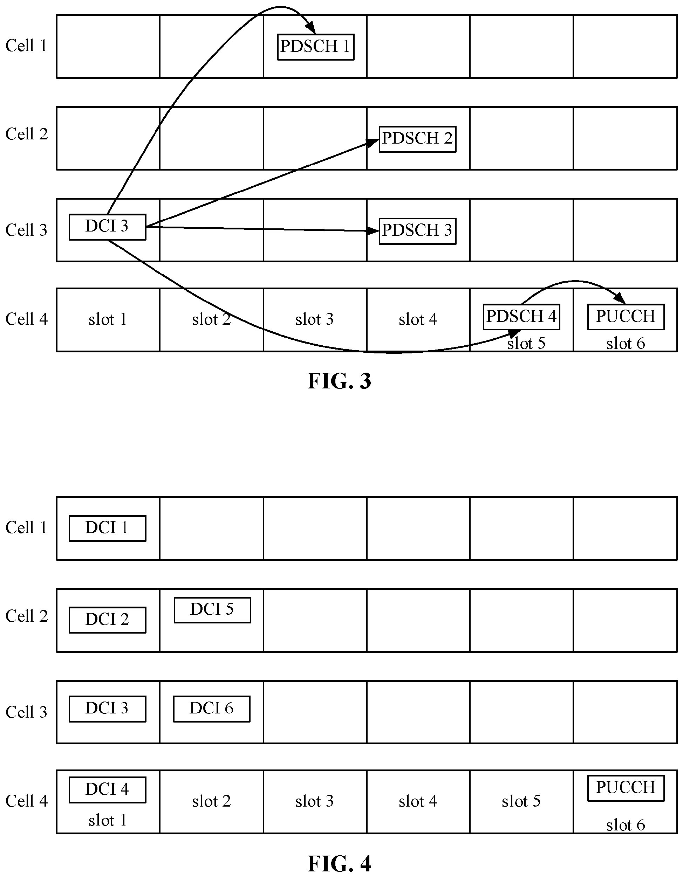

In an example, the DCI may indicate that no transmission exists on one or more scheduled cells, and cells on which no transmission exists are indicated by the HPN or FDRA. By means of the bit map, the HPN indicates cells on which no transmission exists. The bits in the HPN are in one-to-one correspondence with the cells in the cell group. A bit value of '1' indicates that a transmission exists on the corresponding cell, and a bit value of '0' indicates that no transmission exists on the corresponding cell. In an example, by indicating the cell index, the HPN indicates a cell on which no transmission exists or a cell on which a transmission exists. For example, the bit information '00' in the HPN indicates that no transmission exists or a transmission exists on the first cell in the cell group, the bit information '01' in the HPN indicates that no transmission exists or a transmission exists on the second cell in the cell group, and so on. In an example, the HPN field indicating that no transmission exists on one or more cells is the HPN field corresponding to the cell for which the SPS PDSCH is activated or the HPN field corresponding to the cell with the smallest (or largest) index among the cells for which the SPS PDSCHs are activated. FIG. 3 is a schematic diagram illustrating an implementation in which DCI activates SPS PDSCHs of a group of cells according to an embodiment of the present application. As shown in FIG. 3, the base station configures four serving cells for the UE, namely cell 1, cell 2, cell 3, and cell 4. The DCI is sent in slot 1 of cell 3, and the DCI activates the SPS PDSCHs of the four cells. The activated SPS PDSCH (that is, PDSCH 1) of cell 1 is located in slot 3, and the activated SPS PDSCHs (that is, PDSCH 2 and PDSCH 3) of cell 2 and cell 3 are both located in slot 4. The activated SPS PDSCH (that is, PDSCH 4) of cell 4 is located in slot 5.

Accordingly, the DCI includes four RV fields, the first RV field corresponds to cell 1, the second RV field corresponds to cell 2, the third RV field corresponds to cell 3, and the fourth RV field corresponds to cell 4. All the bits of the RV fields are set to 0. In an example, the DCI includes four HPN fields. The first HPN field corresponds to cell 1, the second HPN field corresponds to cell 2, the third HPN field corresponds to cell 3, and the fourth HPN field corresponds to cell 4. Cell 1, cell 2, and cell 4 are each configured with one SPS PDSCH configuration, and the bits of the first, second, and fourth HPN fields are each set to 0; cell 3 is configured with multiple SPS PDSCH configurations, and the third HPN field is used for indicating the index of the activated SPS configuration.

Since PDSCH 4 has the latest ending symbol, the PUCCH is determined according to PDSCH 4. The DCI indicates that the interval between the PDSCH and the PUCCH is one slot. The PUCCH is located in slot 6. The interval between the PDSCH (the PDSCH on cell 1, cell 2, or cell 3) and the PUCCH is determined according to the PUCCH. The interval between PDSCH 1 and the PUCCH is three slots. The interval between PDSCH 2 and the PUCCH and the interval between PDSCH 3 and the PUCCH are each two slots.

FIG. 4 is a schematic diagram illustrating an implementation in which the counter downlink assignment index (DAI) and the total DAI are counted into a Type-2 codebook according to an embodiment of the present application. As shown in FIG. 4, each slot corresponds to one PDCCH detection occasion. A total of six pieces of DCI exist. DCI 1, DCI 2, DCI 3, and DCI 4 are sent in the first PDCCH detection occasion (that is, slot 1), and DCI 5 and DCI 6 are sent in the second PDCCH detection occasion (that is, slot 2). Except that DCI 3 activates the SPS PDSCHs of multiple cells, other pieces of DCI schedule PDSCH transmissions on respective cells. DCI 1 and the PDSCH scheduled by DCI 1 are both located on cell 1. DCI 2, DCI 5, and the PDSCHs scheduled by DCI 2 and DCI 5 are all located on cell 2. DCI 6 and the PDSCH scheduled by DCI 6 are both located on cell 3. DCI 4 and the PDSCH scheduled by DCI 4 are both located on cell 4. The PDSCH transmission is not shown in FIG. 4.

If DCI 3 activates SPS PDSCH transmissions on multiple cells, then DCI 3 is not considered in the counter DAI counting. DCI 1, DCI 2, and DCI 4 are in the first PDCCH detection occasion. According to the indices of the cells on which the PDSCHs are scheduled, the order is DCI 1, DCI 2, and DCI 4, and then the counter DAI values are 1, 2, and 3, respectively. DCI 5 and DCI 6 are in the second PDCCH detection occasion. According to the indices of the cells on which the PDSCHs are scheduled, the order is DCI 5 and DCI 6, and then the counter DAI values are 4 and 5, respectively.

Moreover, DCI 3 is not considered in the total DAI counting. In the first PDCCH detection occasion, a total of three pieces of DCI (that is, DCI 1, DCI 2, and DCI 4) exist. Up to the first PDCCH detection occasion, a total of three pieces of DCI exist, and each of the total DAI values of the three pieces of DCI is 3. In the second PDCCH detection occasion, a total of two pieces of DCI (that is, DCI 5 and DCI 6) exist. Up to the second PDCCH detection occasion, a total of five pieces of DCI exist, and each of the total DAI values of the two pieces of DCI is 5.

Scheduling case 2

The DCI schedules one or more cells, the DCI deactivates the SPS PDSCHs of the one or more cells, or the DCI indicates the TCI state update of the one or more cells, or the DCI deactivates the SPS of at least one cell and indicates the TCI state update of at least one cell. The fields corresponding to these cells are configured according to the preceding embodiments. In an example, the DCI may indicate that no transmission exists on at least one of the cells, and the corresponding field is configured according to the preceding embodiments.

The slot where the PUCCH is located is determined according to the DCI and the interval between the PDSCH and the PUCCH. In an example, if the DCI is located in slot n or the last symbol of the DCI is located in slot n, then the PUCCH is located in slot n+k, where the interval between the PDSCH and the PUCCH is k slots.

The Type-1 HARQ codebook is transmitted in the first slot. The UE generates the corresponding Type-1 HARQ codebook. For the first slot, the UE first determines a slot set, and the interval between any slot in the slot set and the first slot can satisfy the slot interval requirement. For each slot in the slot set, the UE generates one or more HARQ information bits. In an example, if the UE may receive multiple PDSCHs within a slot, for each slot in the slot set, the UE divides all TDRAs into one or more start and length indicator value (SLIV) groups and then generates a fixed number of bits of HARQ information for each SLIV group. The UE first concatenates the HARQ information bits of all SLIV groups within a slot, then concatenates the HARQ information bits of all slots within a slot set on a cell, and finally concatenates the HARQ information bits on all cells to form the Type-1 codebook. The DCI deactivates the SPS PDSCHs of one or more cells, or the DCI indicates the TCI state update of the one or more cells, or the DCI deactivates the SPS of at least one cell and indicates the TCI state update of at least one cell. The UE provides acknowledgment/negative acknowledgment (ACK/NACK) feedback for the DCI. That is, if the UE receives the DCI, the UE feeds an ACK back to the base station. For the Type-1 codebook, the position of the acknowledge (ACK) information corresponding to the DCI in the Type-1 codebook is determined by the deactivated SPS PDSCH (or the PDSCH indicated by the DCI on the cell indicating a TCI state update) and/or the slot where the DCI is located. In an example, the ACK information corresponds to the slot where the DCI is located. If a slot includes one or more SLIV groups, the ACK information corresponds to the SLIV group where the deactivated SPS PDSCH (or the PDSCH indicated by the DCI on the cell indicating a TCI state update) is located. In an example, the ACK information corresponding to the DCI corresponds to the SLIV group where the SPS PDSCH (or the PDSCH indicated by the DCI on the cell indicating a TCI state update) on the cell with the smallest (or largest) index is located. In an example, for the SLIV group where each deactivated SPS PDSCH (or the PDSCH indicated by the DCI on each cell indicating a TCI state update) is located, the UE generates the ACK/NACK information, which is the ACK information corresponding to the DCI.

For the Type-2 codebook, the DCI is counted into the counter DAI or the total DAI. In an example, the counter DAI value of the DCI is determined according to the cell with the smallest (or largest) index among the cells on which the SPS PDSCHs are deactivated and/or the cells that indicate the TCI state update. In other words, the cell with the smallest (or largest) index among the cells on which the SPS PDSCHs are deactivated and/or the cells that indicate the TCI state update is used as the cell scheduled by the DCI to determine the counter DAI value. In an example, the Type-2 codebook includes at least two sub-codebooks, and the first sub-codebook corresponds to a case where one piece of DCI schedules one PDSCH. The second sub-codebook corresponds to a case where one piece of DCI schedules more than one PDSCH. The DCI that indicates SPS PDSCH deactivation and/or a TCI state update is counted into the first sub-codebook or the second sub-codebook.

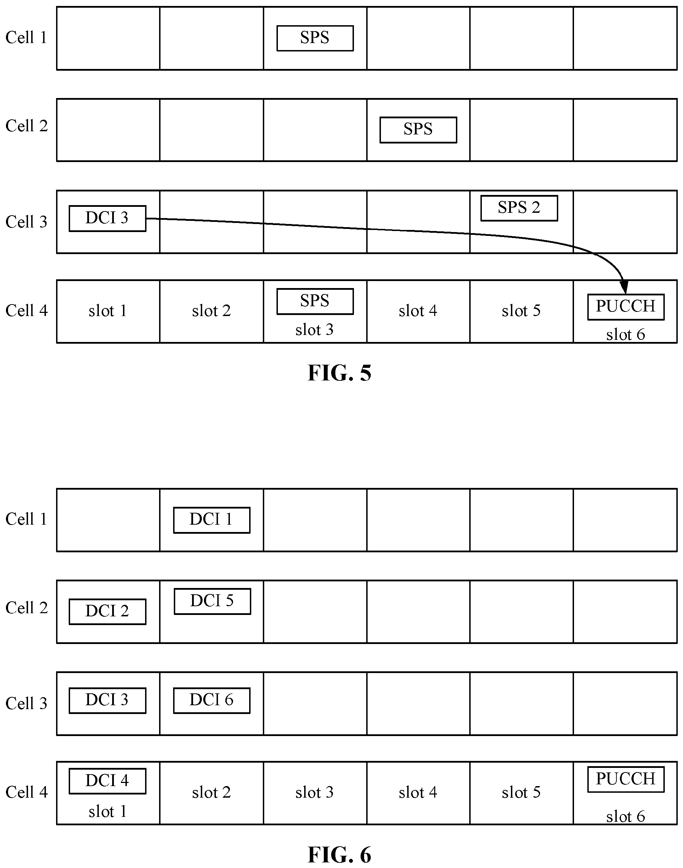

FIG. 5 is a schematic diagram illustrating an implementation in which DCI deactivates SPS PDSCHs of multiple cells according to an embodiment of the present application. As shown in FIG. 5, DCI 3 deactivates the SPS of four cells, that is, DCI 3 simultaneously deactivates the SPS on cell 1, cell 2, and cell 4 and deactivates the SPS with an index of 2 on cell 3.

Correspondingly, the DCI includes four MCS fields, the first MCS field corresponds to cell 1, the second MCS field corresponds to cell 2, the third MCS field corresponds to cell 3, the fourth MCS field corresponds to cell 4, and the bits of the MCS fields are each set to 1.

The DCI includes four FDRA fields, the first FDRA field corresponds to cell 1, the second FDRA field corresponds to cell 2, the third FDRA field corresponds to cell 3, and the fourth FDRA field corresponds to cell 4. The FDRA manner for cell 1 and cell 2 is Type 0, and the corresponding FDRA fields are each set to 0. The FDRA manner for cell 3 is dynamic indication, and the corresponding FDRA field is set to 0. The FDRA manner for cell 4 is Type-1, and the corresponding FDRA field is set to 1.

In an example, the DCI includes four RV fields, the first RV field corresponds to cell 1, the second RV field corresponds to cell 2, the third RV field corresponds to cell 3, and the fourth RV field corresponds to cell 4. All the bits of the RV fields are set to 0.

In an example, the DCI includes four HPN fields, the first HPN field corresponds to cell 1, the second HPN field corresponds to cell 2, the third HPN field corresponds to cell 3, and the fourth HPN field corresponds to cell 4. Cell 1, cell 2, and cell 4 are each configured with only one SPS, so the corresponding HPN fields are each set to 0. Cell 3 is configured with multiple SPSs, so the HPN field corresponding to cell 3 indicates index 2.

When the slot interval indicated in the DCI is 5 and the DCI is sent in slot 1, the corresponding HARQ PUCCH is sent in slot 6.

The UE generates the Type-1 codebook. In an example, the position of the HARQ information corresponding to DCI 3 in the Type-1 codebook is the position of the SPS PDSCH deactivated on cell 1 in the Type-1 codebook. In an example, pieces of HARQ information at the positions of the SPS PDSCHs of cell 1, cell 2, cell 3, and cell 4 in the Type-1 codebook are each set to the ACK.

FIG. 6 is a schematic diagram illustrating an implementation in which the counter DAI and the total DAI are counted into another Type-2 codebook according to an embodiment of the present application. As shown in FIG. 6, each slot corresponds to one PDCCH detection occasion. A total of six pieces of DCI exist. DCI 2, DCI 3, and DCI 4 are sent in the first PDCCH detection occasion (that is, slot 1), and DCI 1, DCI 5, and DCI 6 are sent in the second PDCCH detection occasion (that is, slot 2). Except that DCI 3 deactivates the SPS PDSCHs of multiple cells, other pieces of DCI schedule PDSCH transmissions on respective cells. DCI 1 and the PDSCH scheduled by DCI 1 are both located on cell 1. DCI 2, DCI 5, and the PDSCHs scheduled by DCI 2 and DCI 5 are all located on cell 2. DCI 6 and the PDSCH scheduled by DCI 6 are both located on cell 3. DCI 4 and the PDSCH scheduled by DCI 4 are both located on cell 4. The PDSCH transmission is not shown in FIG. 6.

DCI 3 deactivates SPS PDSCH transmissions on multiple cells, and DCI 3 is counted into the counter DAI. Therefore, DCI 3 needs to be considered when the counter DAI is counted. The DCI deactivates the SPS PDSCHs on cell 1, cell 2, cell 3, and cell 4. Therefore, the cell with the smallest index, that is, cell 1, is used as the scheduled cell of DCI 3 and used for determining the counter DAI value of DCI 3. If the scheduled cells in the first PDCCH detection occasion are arranged from smallest to largest as follows: cell 1, cell 2, and cell 4, then the counter DAI values of DCI 3, DCI 2, and DCI 4 are 1, 2, and 3, respectively. If the scheduled cells in the second PDCCH detection occasion are arranged from smallest to largest as follows: cell 1, cell 2, and cell 3, then the counter DAI values of DCI 1, DCI 5, and DCI 6 are 4, 5, and 6, respectively.

Moreover, DCI 3 is counted into the total DAI, and DCI 3 needs to be considered by the total DAI. In the first PDCCH detection occasion, a total of three pieces of DCI (that is, DCI 2, DCI 3, and DCI 4) exist. Up to the first PDCCH detection occasion, a total of three pieces of DCI exist, and each of the total DAI values of the three pieces of DCI is 3. In the second PDCCH detection occasion, a total of three pieces of DCI (that is, DCI 1, DCI 5, and DCI 6) exist. Up to the second PDCCH detection occasion, a total of six pieces of DCI exist, and each of the total DAI values of the three pieces of DCI is 6.

Scheduling case 3

The DCI schedules one or more cells, the DCI schedules the PDSCHs of the one or more cells, and the PDSCHs are retransmissions of SPS PDSCHs. The fields corresponding to these cells are configured according to the preceding embodiments. In an example, the DCI may indicate that no transmission exists on at least one cell, and the corresponding field is configured according to the preceding embodiments.

The slot where the PUCCH is located is determined according to the PDSCH with the latest ending symbol and the interval between the PDSCH and the PUCCH. The determination manner is the same as the manner described above.

When the DCI schedules the PDSCH of a cell, the DCI is counted into the counter DAI and/or the total DAI of the first sub-codebook. Moreover, the ACK/NACK information bits of the PDSCH of the cell are included in the first sub-codebook. In an example, the counter DAI value of the DCI is determined according to the cell scheduled by the DCI. In other words, the scheduled cell is used as the cell scheduled by the DCI to determine the counter DAI value. In an example, the PDSCH of the cell does not include the cell on which no transmission exists. When the DCI schedules the PDSCHs of multiple cells, the DCI is counted into the counter DAI and/or the total DAI of the second sub-codebook. Moreover, the ACK/NACK information bits of the PDSCHs of the cells are included in the second sub-codebook. In an example, similar to the preceding embodiments, the counter DAI value of the DCI is determined according to the cell with the smallest (or largest) index in the PDSCHs scheduled by the DCI. In other words, the scheduled cell with the smallest (or largest) index in the SPS PDSCHs is used as the cell scheduled by the DCI to determine the counter DAI value.

Scheduling case 4

The DCI schedules one or more cells, the DCI activates the SPS PDSCH of at least one cell, and the DCI deactivates the SPS PDSCH of at least one cell. In some examples, the DCI indicates the TCI state update of at least one cell. The fields corresponding to these cells are configured according to the preceding embodiments. In an example, the DCI may indicate that no transmission exists on at least one of the cells, and the corresponding field is configured according to the preceding embodiments.

The slot where the PUCCH is located is determined according to the SPS PDSCH with the latest ending symbol among the activated SPS PDSCHs and the interval between the PDSCH and the PUCCH. The determination manner is the same as that in the preceding embodiments.

The UE generates HARQ information bits for the activated SPS PDSCH and the deactivated SPS or the indication of the TCI state update. The UE generates HARQ information bits for the DCI. HARQ information is transmitted in the first slot. For the first slot, the UE determines a slot set. For the Type-1 codebook, the position of the ACK information corresponding to the DCI in the Type-1 codebook is determined by the deactivated SPS PDSCH (or the PDSCH indicated by the DCI on the cell indicating a TCI state update). In an example, the ACK information corresponds to the slot where the deactivated SPS PDSCH (or the PDSCH indicated by the DCI on the cell indicating a TCI state update) is located. In an example, the ACK information corresponds to the slot where the first deactivated SPS PDSCH (or the PDSCH indicated by the DCI on the cell indicating a TCI state update) in the slot set is located. If a slot includes one or more SLIV groups, the ACK information corresponds to the SLIV group where the deactivated SPS PDSCH (or the PDSCH indicated by the DCI on the cell indicating a TCI state update) is located.

In some embodiments, the position of the ACK information corresponding to the DCI in the Type-1 codebook is determined by the SPS PDSCH on the cell with the smallest index among the cells on which the SPS PDSCHs are deactivated and/or the cells that indicate the TCI state update (or the PDSCH indicated by the DCI on the cell indicating the TCI state update). In an example, the ACK information corresponds to the slot where the SPS PDSCH on the cell with the smallest index among the cells on which the SPS PDSCHs are deactivated and/or the cells that indicate the TCI state update (or the PDSCH indicated by the DCI on the cell indicating the TCI state update) is located. In an example, the ACK information corresponds to the slot where the first SPS PDSCH on the cell with the smallest index among the cells on which the SPS PDSCHs are deactivated and/or the cells that indicate the TCI state update (or the PDSCH indicated by the DCI on the cell indicating the TCI state update) in the slot set is located. If a slot includes one or more SLIV groups, the ACK information corresponds to the SLIV group where the deactivated SPS PDSCH (or the PDSCH indicated by the DCI on the cell indicating a TCI state update) is located.

In some embodiments, the position of the corresponding ACK information in the Type-1 codebook is determined by the PDSCH on the cell with the smallest index among the deactivated cells, and the PDSCH is indicated by the TDRA field of the DCI. In an example, the ACK information corresponds to the slot where the PDSCH on the cell with the smallest index among the deactivated cells is located, and the PDSCH and the slot are indicated by the DCI. If a slot includes one or more SLIV groups, the ACK information corresponds to the SLIV group where the indicated PDSCH is located.

In some embodiments, the UE expands a slot interval set and then generates the Type-1 codebook through the expanded slot interval set. For the DCI of the deactivated SPS PDSCH, the position of the ACK information in the Type-1 codebook is determined by the slot where the deactivated SPS PDSCH and the DCI are located. For the DCI that indicates a TCI state update, the position of the ACK information in the Type-1 codebook is determined by the slot where the PDSCH indicated by the DCI and the DCI are located. In an example, the ACK information corresponds to the slot where the DCI is located. If a slot includes one or more SLIV groups, the ACK information corresponds to the SLIV group where the deactivated SPS PDSCH (or the PDSCH indicated by the DCI on the cell indicating a TCI state update) is located.

In an example, for each cell, the UE expands the slot interval set (or increases the slot intervals in the slot interval set). For a cell, each of the slot intervals in the expanded slot interval set (or each of the newly added slot intervals) is determined by at least one of the slot interval configured by the base station, the interval between the PDSCH on the cell and the PDSCH on another cell, or the slot interval between the PDCCH and the PDSCH on the cell. Each of the slot intervals in the expanded slot interval set (or each of the newly added slot intervals) is the sum of any two of the slot interval configured by the base station, the interval between the PDSCH on the cell and the PDSCH on another cell, or the slot interval between the PDCCH and the PDSCH on the cell or the sum of the slot interval configured by the base station, the interval between the PDSCH on the cell and the PDSCH on another cell, and the slot interval between the PDCCH and the PDSCH on the cell.

For example, the slot interval configured by the base station is {kl, k2, k3, k4}, the interval between the PDSCH on cell 1 and the PDSCH on cell 2 is {m1, m2}, and the slot interval between the PDCCH and the PDSCH on cell 1 is {n1, n2}. Based on cell 2, the slot interval of cell 1 is expanded. The expanded slot interval (or the newly added slot intervals) may be as follows: {n1+m1+k1, n1+m1+k2, n1+m1+k3, n1+m1+k4, n1+m2+k1, n1+m2+k2, n1+m2+k3, n1+m2+k4, n2+m1+k1, n2+m1+k2, n2+m1+k3, n2+m1+k4, n2+m2+k1, n2+m2+k2, n2+m2+k3, n2+m2+k4}. It is to be noted that the expanded slot interval set may be the same as the configured slot interval {k1, k2, k3, k4}. The slot intervals of cell 1 after expansion include {n1+m1+k1, n1+m1+k2, n1+m1+k3, n1+m1+k4, n1+m2+k1, n1+m2+k2, n1+m2+k3, n1+m2+k4, n2+m1+k1, n2+m1+k2, n2+m1+k3, n2+m1+k4, n2+m2+k1, n2+m2+k2, n2+m2+k3, n2+m2+k4, k1, k2, k3, k4}.

Each of the intervals m1 and m2 between the PDSCH on cell 1 and the PDSCH on cell 2 is any integer. When the PDSCH on cell 1 and the PDSCH on cell 2 are located in the same slot, m1 or m2 is 0. When the slot where the PDSCH on cell 1 is located is earlier than the slot where the PDSCH on cell 2 is located (or when the slot number of the PDSCH on cell 1 is smaller than the slot number of the PDSCH on cell 2), m1 or m2 is positive; when the slot where the PDSCH on cell 1 is located is later than the slot where the PDSCH on cell 2 is located (or when the slot number of the PDSCH on cell 1 is greater than the slot number of the PDSCH on cell 2), m1 or m2 is negative. Therefore, the interval between the PDSCH on cell 2 and the PDSCH on cell 1 is {-m1, -m2}. The slot interval between the PDCCH and the PDSCH on cell 2 is {s1, s2}. Based on cell 1, the slot interval set of cell 2 is expanded. The expanded slot interval (or the newly added slot intervals) may be as follows: {s1-m1+k1, s1-m1+k2, s1-m1+k3, s1-m1+k4, s1-m2+k1, s1-m2+k2, s1-m2+k3, s1-m2+k4, s2-m1+k1, s2-m1+k2, s2-m1+k3, s2-m1+k4, s2-m2+k1, s2-m2+k2, s2-m2+k3, s2-m2+k4}. The slot intervals of cell 2 after expansion include {s1-m1+k1, s1-m1+k2, s1-m1+k3, s1-m1+k4, s1-m2+k1, s1-m2+k2, s1-m2+k3, s1-m2+k4, s2-m1+k1, s2-ml+k2, s2-m1+k3, s2-m1+k4, s2-m2+k1, s2-m2+k2, s2-m2+k3, s2-m2+k4, k1, k2, k3, k4}.

For any cell in the cell group, the UE expands the slot interval set according to the method and then generates the Type-1 codebook through the expanded slot interval set.

In some embodiments, the DCI for scheduling is sent in one slot in the slot set. From the perspective of the UE, the UE expects the DCI to be sent in one slot in the slot set.

For the Type-2 codebook, the DCI is counted into the counter DAI and/or the total DAI of the second sub-codebook. Moreover, the ACK/NACK information bits of the PDSCHs of the cells are included in the second sub-codebook. In an example, the counter DAI value of the DCI is determined according to the cell with the smallest (or largest) index among the cells on which the SPS PDSCHs are deactivated and/or the cells that indicate the TCI state update. In other words, the cell with the smallest (or largest) index among the cells on which the SPS PDSCHs are deactivated and/or the cells that indicate the TCI state update is used as the cell scheduled by the DCI to determine the counter DAI value. For the DCI, the UE generates HARQ information bits, which are generated in the ascending order of cell indices.

Scheduling case 5

In some embodiments, one or more cells are scheduled, the DCI activates the SPS PDSCH of at least one cell, the DCI schedules PDSCH retransmission of at least one cell, and the PDSCH retransmission is the SPS PDSCH retransmission. The fields corresponding to these cells are configured according to the preceding embodiments. In an example, the DCI may indicate that no transmission exists on at least one of the cells, and the corresponding field is configured according to the preceding embodiments.

The slot where the PUCCH is located is determined according to the PDSCH with the latest ending symbol among the activated SPS PDSCHs and/or the retransmitted PDSCHs and the interval between the PDSCH and the PUCCH. The determination manner is the same as that in the preceding embodiments.

For the Type-2 codebook, the DCI is counted into the counter DAI and/or the total DAI of the second sub-codebook. The counter DAI is determined according to the cell with the smallest index among the cells on which the SPS PDSCHs are activated and the PDSCHs are retransmitted, or according to the cell with the smallest index among the cells on which the SPS PDSCHs are activated, or according to the cell with the smallest index among the cells on which the PDSCHs are retransmitted. Moreover, the ACK/NACK information bits of the PDSCHs of the cells are included in the second sub-codebook. For the DCI, the UE generates HARQ information bits, which are generated in the ascending order of cell indices.

Scheduling case 6

In some embodiments, one or more cells are scheduled, the DCI deactivates the SPS PDSCH of at least one cell, the DCI schedules PDSCH retransmission of at least one cell, and the PDSCH retransmission is the SPS PDSCH retransmission. In some examples, the DCI indicates the TCI state update of at least one cell. The fields corresponding to these cells are configured according to the preceding embodiments. In an example, the DCI may indicate that no transmission exists on at least one of the cells, and the corresponding field is configured according to the preceding embodiments.

The slot where the PUCCH is located is determined according to the PDSCH with the latest ending symbol among the PDSCHs indicated by the DCI on the cell on which the SPS PDSCH is deactivated and/or the cell on which the PDSCH is retransmitted and/or the cell indicating a TCI state update and the interval between the PDSCH and the PUCCH. The determination manner is the same as that in the preceding embodiments.

For the Type-1 codebook, the UE generates HARQ information bits according to the manner described in the preceding embodiments.

For the Type-2 codebook, the DCI is counted into the counter DAI and/or the total DAI of the second sub-codebook. The counter DAI is determined according to the cell with the smallest index among the cells on which the SPS PDSCHs are deactivated, the PDSCHs are retransmitted, and the TCI state update is indicated, or according to the cell with the smallest index among the cells on which the SPS PDSCHs are deactivated, or according to the cell with the smallest index among the cells on which the PDSCHs are retransmitted, or according to the cell with the smallest index among the cells indicating the TCI state update. Moreover, the ACK/NACK information bits of the PDSCHs of the cells are included in the second sub-codebook. For the DCI, the UE generates HARQ information bits, which are generated in the ascending order of cell indices.

Scheduling case 7

In some embodiments, one or more cells are scheduled, the DCI deactivates the SPS PDSCH of at least one cell, the DCI schedules the PDSCH of at least one cell, and the scheduled PDSCH is a retransmission of the SPS PDSCH. In some examples, the DCI indicates the TCI state update of at least one cell. The fields corresponding to these cells are configured according to the preceding embodiments. In an example, the DCI may indicate that no transmission exists on at least one of the cells, and the corresponding field is configured according to the preceding embodiments.

The slot where the PUCCH is located is determined according to the PDSCH with the latest ending symbol among the PDSCHs indicated by the DCI on the cell on which the SPS PDSCH is activated and/or the cell on which the PDSCH is scheduled and/or the cell on which the SPS PDSCH is deactivated and/or the cell indicating a TCI state update and the interval between the PDSCH and the PUCCH. The determination manner is the same as that in the preceding embodiments.

For the Type-1 codebook, the UE generates HARQ information bits according to the manner described in the preceding embodiments.

For the Type-2 codebook, the DCI is counted into the counter DAI and/or the total DAI of the second sub-codebook. The counter DAI is determined according to the cell with the smallest index among the cells on which the SPS PDSCHs are activated and/or the SPS PDSCHs are deactivated and/or the PDSCHs are retransmitted and/or the TCI state update is indicated, or according to the cell with the smallest index among the cells on which the SPS PDSCHs are deactivated, or according to the cell with the smallest index among the cells on which the SPS PDSCHs are activated, or according to the cell with the smallest index among the cells on which the PDSCHs are retransmitted, or according to the cell with the smallest index among the cells indicating the TCI state update. Moreover, the ACK/NACK information bits of the PDSCHs of the cells are included in the second sub-codebook. For the DCI, the UE generates HARQ information bits, which are generated in the ascending order of cell indices.

Embodiment two

In some embodiments, the CRC of the DCI may be scrambled by the CS-RNTI. For uplink transmission, the DCI schedules one or more cells. For each scheduled cell, the DCI may activate the CG PUSCH transmission, deactivate the CG PUSCH, schedule at least one PUSCH, or indicate that no transmission exists. The scheduled PUSCH is a retransmission or a new transmission of the CG PUSCH.

When the DCI activates CG PUSCH transmission of a certain scheduled cell, the value of the NDI corresponding to the cell in the DCI is set to the first predefined value. In an example, the NDI is set to 0. In an example, the RV corresponding to the cell in the DCI is set to the first predefined value. For example, the bits of the RV are each set to 0. In an example, the HPN corresponding to the cell in the DCI is set to the first predefined value. For example, the bits of the HPN are each set to 0, or the HPN corresponding to the cell indicates the index of the CG PUSCH to be activated. In other words, the field corresponding to the cell in the DCI is set to the corresponding value to indicate that the DCI has activated the CG PUSCH transmission of the cell.

When the DCI deactivates CG PUSCH transmission of a certain scheduled cell, the value of the NDI corresponding to the cell in the DCI is set to the first predefined value. In an example, the NDI is set to 0. In an example, the RV corresponding to the cell in the DCI is set to the first predefined value. For example, the bits of the RV are each set to 0. In an example, the HPN corresponding to the cell in the DCI is set to the first predefined value. For example, the bits of the HPN are each set to 0, or the HPN corresponding to the cell indicates the index of the CG PUSCH to be deactivated. Optionally, the MCS corresponding to the cell in the DCI is set to the second predefined value. For example, the bit values of the MCS are each set to 1. The FDRA field corresponding to the cell in the DCI is set to a fifth predefined value. In an example, if the FDRA manner is Type-2, the values of the FDRA are each set to 0; otherwise (that is, in other resource allocation manners), the values of the FDRA are each set to 1. In other words, the field corresponding to the cell in the DCI is set to the corresponding value to indicate that the DCI has deactivated the CG PUSCH transmission of the cell.

When the DCI schedules CG PUSCH retransmission of a certain scheduled cell, the value of the NDI corresponding to the cell in the DCI is set to the second predefined value. In an example, the NDI is set to 1. In an example, the FDRA field corresponding to the cell in the DCI cannot be set to the fifth predefined value. In an example, if the FDRA manner is Type-2, the values of the FDRA cannot be all zeros; otherwise (that is, in other resource allocation manners), the values of the FDRA cannot be all ones. In other words, the field corresponding to the cell in the DCI is set to the corresponding value to indicate that the DCI has scheduled the CG PUSCH retransmission of the cell.

When the DCI indicates that no transmission exists on a certain scheduled cell, the FDRA field corresponding to the cell in the DCI is set to the fifth predefined value. In an example, if the FDRA manner is dynamic switching or Type-0, the values of the FDRA are each set to 0; and if the FDRA manner is Type-1, the values of the FDRA are each set to 1. The corresponding NDI, RV, HPN, and MCS of the cell are set to predefined values. The predefined value in the DCI indicating that no transmission exists is different from at least one of the predefined values for CG PUSCH activation, CG PUSCH deactivation, and CG PUSCH retransmission. That is, the predefined value of scheduling-related information indicating that no transmission exists is different from at least one of the predefined values of scheduling-related information during CG PUSCH activation, is different from at least one of the predefined values of scheduling-related information during CG PUSCH deactivation, and is different from at least one of the predefined values of scheduling-related information during CG PUSCH retransmission. In an example, the NDI is set to 1.

Compared with CG PUSCH activation, when the CG PUSCH is activated, the NDI is set to 0; and when it is indicated that no transmission exists, the NDI is set to 1. The predefined value of the NDI indicating that no transmission exists is different from the predefined value of the NDI during CG PUSCH activation.

Compared with CG PUSCH deactivation, when the CG PUSCH is deactivated, the NDI is set to 0; and when it is indicated that no transmission exists, the NDI is set to 1. The predefined value of the NDI indicating that no transmission exists is different from the predefined value of the NDI during CG PUSCH activation.

Compared with CG PUSCH retransmission, the FDRA field in the CG PUSCH retransmission cannot be set to the fifth predefined value; and when there is no transmission, the FDRA field is set to the fifth predefined value. The value of the FDRA field indicating that no transmission exists is different from the value of the FDRA field for SPS PDSCH retransmission.

Embodiment three

In some embodiments, the CRC of the DCI may be scrambled by the semi-persistent channel state information RNTI (SP-CSI-RNTI). For uplink transmission, the DCI schedules one or more cells.

In some embodiments, the DCI may activate or deactivate semi-persistent channel state information (SP CSI) transmission in a specific cell among multiple scheduled cells. For other cells, the DCI schedules the PUSCH transmission, and the PUSCH carries the uplink shared channel (UL-SCH). The specific cell is the cell with the smallest index or the largest index among one or more scheduled cells, or the cell with the smallest index configured with periodic channel state information (CSI) feedback, or the cell with the largest index configured with periodic feedback. In the DCI, the aperiodic CSI request field is applied to the specific cell, and the aperiodic CSI request field indicates the CSI request for the specific cell.

In some embodiments, for each scheduled cell, the DCI may activate SP CSI transmission, deactivate SP CSI, schedule at least one PUSCH, or indicate that no transmission exists.

When the DCI activates SP CSI transmission of a certain scheduled cell, the RV corresponding to the cell in the DCI is set to the first predefined value. For example, the bits of the RV are each set to 0. In an example, the HPN corresponding to the cell in the DCI is set to the first predefined value. For example, the bits of the HPN are each set to 0. In other words, the field corresponding to the cell in the DCI is set to the corresponding value to indicate that the DCI has activated the SP CSI transmission of the cell.

When the DCI deactivates SP CSI transmission of a certain scheduled cell, the RV corresponding to the cell in the DCI is set to the first predefined value. For example, the bits of the RV are each set to 0. In an example, the HPN corresponding to the cell in the DCI is set to the first predefined value. For example, the bits of the HPN are each set to 0. Optionally, the MCS corresponding to the cell in the DCI is set to the second predefined value. For example, the bit values of the MCS are each set to 1. The FDRA field corresponding to the cell in the DCI is set to a sixth predefined value. In an example, if the FDRA manner is configured to be Type-0, the values of the FDRA are each set to 0; and if the FDRA manner is configured to be Type-1, the values of the FDRA are each set to 1. In the case where the FDRA type is configured to be dynamic switching between Type-0 and Type-1, if the most significant bit of the FDRA field is 0, then all FDRA fields are set to 0 (except for the most significant bit); if the most significant bit of the FDRA field is 1, then all FDRA fields are set to 1 (except for the most significant bit). If the FDRA manner is configured to be Type-2, for a subcarrier spacing of 15 kHz, all FDRA fields are set to 1; for a subcarrier spacing of 30 kHz, all FDRA fields are set to 1. In other words, the field corresponding to the cell in the DCI is set to the corresponding value to indicate that the DCI has deactivated the SP CSI transmission of the cell.

When the DCI indicates that no transmission exists on a certain scheduled cell, the FDRA field corresponding to the cell in the DCI is set to the third predefined value. In an example, if the FDRA manner is dynamic switching or Type-0, the values of the FDRA are each set to 0; and if the FDRA manner is Type-1, the values of the FDRA are each set to 1. The corresponding RV, HPN, and MCS of the cell are set to predefined values, where the predefined values are different from at least one of the predefined values for SP CSI activation, SP CSI deactivation, and PUSCH scheduling.

Embodiment four

In some embodiments, the CRC of the DCI may be scrambled by the Cell Radio Network Temporary Identifier (C-RNTI), the Modulation and Coding Scheme C-RNTI (MCS-C-RNTI), the CS-RNTI, the SPS-CSI-RNTI, or other RNTIs.

The base station configures multiple cell groups for the UE. Each cell group has an index for identifying the cell group. In an example, the scheduling DCIs for the multiple cell groups are sent on the same cell. In an example, the base station configures multiple cell groups for the UE by using the first RRC signaling, and one information element of the first RRC signaling may be used for adding the cell group. For the added cell group, the information element includes specific configuration information of the cell group, such as which cells the cell group includes and which fields are included in the DCI of the cell group. Another information element of the first RRC signaling may be used for deleting the cell group, and the information element includes one or more cell group indices and is used for deleting the cell group with the index.

The DCI may schedule any one of the multiple cell groups. The DCI indicates the scheduled cell group. In an example, the DCI includes a scheduled cell group field, and the length of the field is associated with the number of configured cell groups. For example, if the base station configures N cell groups, then the length of the field is $\lceil \log_2 N \rceil$. The field indicates the cell group scheduled by the DCI. For example, the field includes two bits. The bit information '00' indicates the first cell group, that is, the DCI has scheduled the first cell group. The bit information '01' indicates the second cell group, that is, the DCI has scheduled the second cell group. The bit information '10' indicates the third cell group, that is, the DCI has scheduled the third cell group. The bit information '11' indicates the fourth cell group, that is, the DCI has scheduled the fourth cell group.

In some embodiments, the cell groups are sorted according to the indices of the cell groups. The first cell group indicated by the DCI is the cell group with the smallest (or largest) index; the second cell group indicated by the DCI is the cell group with the second smallest (or second largest) index; the third cell group indicated by the DCI is the cell group with the third smallest (or third largest) index; and so on. For example, the base station configures four cell groups, namely cell group A, cell group B, cell group C, and cell group D. The indices are 3, 7, 1, and 4, respectively. The cell groups are sorted in the ascending order of the cell indices, and the order is as follows: cell group C, cell group A, cell group D, and cell group B. The information bits '00', '01', '10', and '11' of the scheduled cell group field indicate (or schedule) cell group C, cell group A, cell group D, and cell group B, respectively.

In some embodiments, by using second RRC signaling or a medium access control (MAC) control element (CE), the base station configures the order of cell groups indicated by the DCI. The second RRC signaling is different from the first RRC signaling. The first cell group indicated by the DCI is the cell group indicated by the first entry in the second RRC signaling or the MAC CE, the second cell group indicated by the DCI is the cell group indicated by the second entry in the second RRC signaling or the MAC CE, the third cell group indicated by the DCI is the cell group indicated by the third entry in the second RRC signaling or the MAC CE; and so on. In an example, the second RRC signaling or the MAC CE only indicates (or includes) the indices of the cell groups. For example, the second RRC signaling is configured with (or includes) four entries, where the first entry includes (or is configured with) cell group index 1, the second entry includes (or is configured with) cell group index 3, the third entry includes (or is configured with) cell group index 5, and the fourth entry includes (or is configured with) cell group index 2. The information bits '00', '01', '10', and '11' of the scheduled cell group field indicate (or schedule) the cell group with index 1, the cell group with index 3, the cell group with index 5, and the cell group with index 2, respectively.

In some embodiments, the indication order of cell groups in the DCI is determined according to the configuration of the first RRC signaling, or the cell groups are sorted according to the configuration of the first RRC signaling. Cell groups configured in the same first RRC signaling are sorted according to the order of entries. Among the cell groups configured in different first RRC signaling, the cells in the first RRC signaling that is sent later are placed after the cells in the first RRC signaling that is sent earlier. For example, the first RRC signaling is configured with three cell groups. The first entry includes cell group A, the second entry includes cell group B, and the third entry includes cell group C. The order of the cell groups is as follows: cell group A, cell group B, and cell group C. The information bits '00', '01', and '10' of the scheduled cell group field indicate (or schedule) cell group A, cell group B, and cell group C, respectively. Then, the cell group B is deleted through the first RRC signaling. The order of the cell groups is as follows: cell group A and cell group C. In this case, the scheduled cell group field includes 1 bit, and the information bits '0' and '1' indicate (or schedule) cell group A and cell group C, respectively. Then, cell group D and cell group B are added through the second first RRC signaling, where the first entry includes cell group D and the second entry includes cell group B. The order of the cell groups is as follows: cell group A, cell group C, cell group D, and cell group B. In this case, the scheduled cell group field includes 2 bits, and the information bits '00', '01', '10', and '11' indicate (or schedule) cell group A, cell group C, cell group D, and cell group B, respectively.

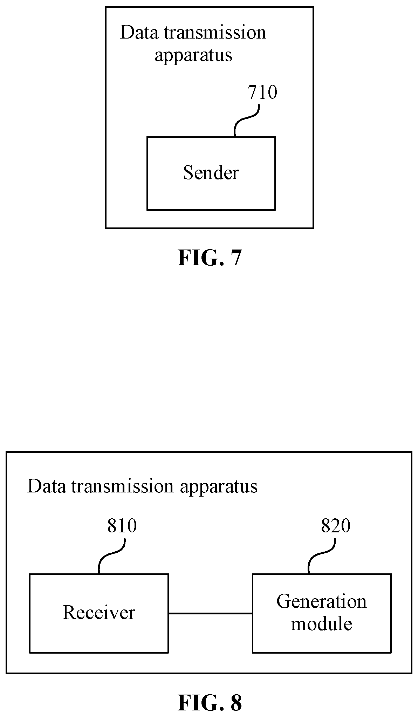

In an embodiment, FIG. 7 is a block diagram of a data transmission apparatus according to an embodiment of the present application. This embodiment is applied to a first communication node. As shown in FIG. 7, the data transmission apparatus in this embodiment includes a sender 710.

The sender 710 is configured to send schedule indication information to a second communication node, where the scheduling indication information is used for indicating resource configuration information corresponding to at least two carriers; and the resource configuration information is used for indicating at least one of the following: activation of semi-persistent transmission, deactivation of semi-persistent transmission, retransmission of semi-persistent transmission, or TCI state update.

In an embodiment, the resource configuration information includes at least one of the following parameters: a BWP indication, an NDI, an RV, an HPN, an MCS, an FDRA field, or a TDRA field.

In an embodiment, the CRC of the scheduling indication information is scrambled by a first RNTI.

In the case where the scheduling indication information is used for scheduling downlink transmission resources, the scheduling indication information is used for at least one of the following operations: activating SPS PDSCH transmission, deactivating SPS PDSCH transmission, scheduling PDSCH retransmission, indicating a TCI state update for a carrier, or indicating that no transmission exists on a carrier.

In an embodiment, in the case where the scheduling indication information is used for activating SPS PDSCH transmission of a carrier, the NDI, RV, or HPN of the carrier is set to a first predefined value.

In an embodiment, in the case where the scheduling indication information is used for deactivating SPS PDSCH transmission of a carrier, the NDI, RV, or HPN of the carrier is set to the first predefined value, the MCS of the carrier is set to a second predefined value, and the FDRA of the carrier is set to a third predefined value.

In an embodiment, in the case where the scheduling indication information is used for indicating PDSCH retransmission of a carrier, the NDI of the carrier is set to the second predefined value.

In an embodiment, in the case where the scheduling indication information is used for indicating a TCI state update for a carrier, the NDI of the carrier is set to the first predefined value, the RV or MCS of the carrier is set to the second predefined value, and the FDRA of the carrier is set to the third predefined value.

In an embodiment, when the scheduling indication information is used for indicating that no transmission exists on a carrier, the FDRA of the carrier is set to the third predefined value, and the NDI, RV, HPN, and MCS of the carrier are each set to a fourth predefined value. The fourth predefined value is different from the predefined values for SPS PDSCH activation, SPS PDSCH deactivation, SPS PDSCH retransmission, and a TCI state update.

In an embodiment, the data transmission apparatus applied to the first communication node further includes a receiver.

The receiver is configured to receive HARQ feedback information sent by the second communication node on a first feedback resource, where a time domain position of the first feedback resource is determined by a first time domain position and a first time domain interval, and the first time domain interval is indicated by the scheduling indication information or configured by the first communication node.

In an embodiment, the first time domain position includes at least one of the following: a time domain position of the SPS PDSCH with the latest ending symbol among at least one activated SPS PDSCH, a time domain position of the SPS PDSCH with the latest ending symbol among at least one deactivated SPS PDSCH, a time domain position of the PDSCH with the latest ending symbol among at least one scheduled PDSCH, or a time domain position of the scheduling indication information.

In an embodiment, in the case where the scheduling indication information is used for deactivating SPS PDSCH transmission of at least one carrier, the position of the HARQ feedback information in the first type codebook is determined by at least one of the SPS PDSCH with the smallest carrier index among the deactivated SPS PDSCHs or the time domain position of the scheduling indication information.

In an embodiment, in the case where the scheduling indication information is used for deactivating SPS PDSCH transmission of at least one carrier, the position of the HARQ feedback information in the first type codebook is determined by the time domain position of the PDSCH on the carrier with the smallest carrier index among the at least one deactivated carrier, where the PDSCH on the carrier with the smallest carrier index is indicated by the TDRA field in the scheduling indication information.

In an embodiment, the first type codebook is generated using the pre-expanded time domain interval set.

In an embodiment, for the second type codebook, the scheduling indication information is used for indicating the counter DAI and the total DAI.

The HARQ feedback information is generated according to the order of the counter DAI.

The counter DAI is the cumulative number of pieces of scheduling indication information up to the current PDCCH detection occasion and the current carrier or the cumulative number of combinations of scheduling indication information and carriers.

The total DAI is the total number of pieces of scheduling indication information up to the current PDCCH detection occasion or the total number of combinations of scheduling indication information and carriers.

In an embodiment, in the case where the scheduling indication information schedules one or more carriers and any one of the one or more carriers corresponds to the activated SPS PDSCH or no transmission, the scheduling indication information is skipped when the counter DAI or the total DAI is counted.

In an embodiment, for the second type codebook, in the case where the scheduling indication information deactivates the SPS PDSCH of a carrier, schedules SPS PDSCH retransmission, or indicates a TCI state update for a carrier and at least two carriers exist, the counter DAI or the total DAI is counted into a sub-codebook for the scheduling indication information scheduling multiple PDSCHs.

When one carrier exists, the counter DAI or the total DAI is counted into a sub-codebook for the scheduling indication information scheduling one PDSCH.

In an embodiment, in the case where the scheduling indication information is used for scheduling uplink transmission resources, the scheduling indication information is used for at least one of the following operations: activating CG PUSCH transmission, deactivating CG PUSCH transmission, scheduling CG PUSCH retransmission, or indicating that no transmission exists on a carrier.

The data transmission apparatus of this embodiment is configured to perform the data transmission method applied to the first communication node in the embodiment shown in FIG. 1 and has implementation principles and technical effects similar to those of the data transmission method applied to the first communication node in the embodiment shown in FIG. 1, where the details are not repeated here.

In an embodiment, FIG. 8 is a block diagram of another data transmission apparatus according to an embodiment of the present application. This embodiment is applied to a second communication node. As shown in FIG. 8, the data transmission apparatus in this embodiment includes a receiver 810 and a generation module 820.

The receiver 810 is configured to receive scheduling indication information sent by a first communication node.

The scheduling indication information is used for indicating resource configuration information corresponding to at least two carriers; and the resource configuration information is used for indicating at least one of the following: activation of semi-persistent transmission, deactivation of semi-persistent transmission, retransmission of semi-persistent transmission, or TCI state update.

The generation module 820 is configured to configure first feedback resource corresponding to HARQ feedback information or send the PUSCH according to the scheduling indication information.

In an embodiment, the resource configuration information includes at least one of the following parameters: a BWP indication, an NDI, an RV, an HPN, an MCS, an FDRA field, or a TDRA field.

In an embodiment, the CRC of the scheduling indication information is scrambled by a first RNTI.

In the case where the scheduling indication information is used for scheduling downlink transmission resources, the scheduling indication information is used for at least one of the following operations: activating SPS PDSCH transmission, deactivating SPS PDSCH transmission, scheduling PDSCH retransmission, indicating a TCI state update for a carrier, or indicating that no transmission exists on a carrier.

In an embodiment, in the case where the scheduling indication information is used for activating SPS PDSCH transmission of a carrier, the NDI, RV, or HPN of the carrier is set to a first predefined value.

In an embodiment, in the case where the scheduling indication information is used for deactivating SPS PDSCH transmission of a carrier, the NDI, RV, or HPN of the carrier is set to the first predefined value, the MCS of the carrier is set to a second predefined value, and the FDRA of the carrier is set to a third predefined value.

In an embodiment, in the case where the scheduling indication information is used for indicating PDSCH retransmission of a carrier, the NDI of the carrier is set to the second predefined value.

In an embodiment, in the case where the scheduling indication information is used for indicating a TCI state update for a carrier, the NDI of the carrier is set to the first predefined value, the RV or MCS of the carrier is set to the second predefined value, and the FDRA of the carrier is set to the third predefined value.

In an embodiment, when the scheduling indication information is used for indicating that no transmission exists on a carrier, the FDRA of the carrier is set to the third predefined value, and the NDI, RV, HPN, and MCS of the carrier are each set to a fourth predefined value. The fourth predefined value is different from the predefined values for SPS PDSCH activation, SPS PDSCH deactivation, SPS PDSCH retransmission, and a TCI state update.

In an embodiment, the data transmission apparatus applied to the second communication node further includes a sender.

The sender is configured to send HARQ feedback information to the second communication node on a first feedback resource, where a time domain position of the first feedback resource is determined by a first time domain position and a first time domain interval, and the first time domain interval is indicated by the scheduling indication information or configured by the first communication node.

In an embodiment, the first time domain position includes at least one of the following: a time domain position of the SPS PDSCH with the latest ending symbol among at least one activated SPS PDSCH, a time domain position of the SPS PDSCH with the latest ending symbol among at least one deactivated SPS PDSCH, a time domain position of the PDSCH with the latest ending symbol among at least one scheduled PDSCH, or a time domain position of the scheduling indication information.

In an embodiment, in the case where the scheduling indication information is used for deactivating SPS PDSCH transmission of at least one carrier, the position of the HARQ feedback information in the first type codebook is determined by at least one of the SPS PDSCH with the smallest carrier index among the deactivated SPS PDSCHs or the time domain position of the scheduling indication information.

In an embodiment, in the case where the scheduling indication information is used for deactivating SPS PDSCH transmission of at least one carrier, the position of the HARQ feedback information in the first type codebook is determined by the time domain position of the PDSCH on the carrier with the smallest carrier index among the at least one deactivated carrier, where the PDSCH on the carrier with the smallest carrier index is indicated by the TDRA field in the scheduling indication information.

In an embodiment, the first type codebook is generated using the pre-expanded time domain interval set.

In an embodiment, for the second type codebook, the scheduling indication information is used for indicating the counter DAI and the total DAI.

The HARQ feedback information is generated according to the order of the counter DAI.

The counter DAI is the cumulative number of pieces of scheduling indication information up to the current PDCCH detection occasion and the current carrier or the cumulative number of combinations of scheduling indication information and carriers.

The total DAI is the total number of pieces of scheduling indication information up to the current PDCCH detection occasion or the total number of combinations of scheduling indication information and carriers.

In an embodiment, in the case where the scheduling indication information schedules one or more carriers and any one of the one or more carriers corresponds to the activated SPS PDSCH or no transmission, the scheduling indication information is skipped when the counter DAI or the total DAI is counted.

In an embodiment, for the second type codebook, in the case where the scheduling indication information deactivates the SPS PDSCH of a carrier, schedules SPS PDSCH retransmission, or indicates a TCI state update for a carrier and at least two carriers exist, the counter DAI or the total DAI is counted into a sub-codebook for the scheduling indication information scheduling multiple PDSCHs.

When one carrier exists, the counter DAI or the total DAI is counted into a sub-codebook for the scheduling indication information scheduling one PDSCH.

In an embodiment, in the case where the scheduling indication information is used for scheduling uplink transmission resources, the scheduling indication information is used for at least one of the following operations: activating CG PUSCH transmission, deactivating CG PUSCH transmission, scheduling CG PUSCH retransmission, or indicating that no transmission exists on a carrier.

The data transmission apparatus of this embodiment is configured to perform the data transmission method applied to the second communication node in the embodiment shown in FIG. 2 and has implementation principles and technical effects similar to those of the data transmission method applied to the second communication node in the embodiment shown in FIG. 2, where the details are not repeated here.

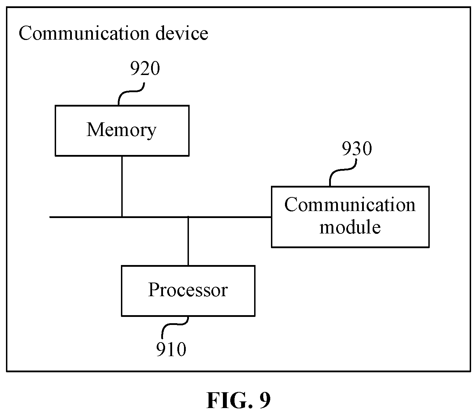

In an embodiment, FIG. 9 is a diagram illustrating the structure of a communication device according to an embodiment of the present application. As shown in FIG. 9, the device of the present application includes a processor 910, a memory 920, and a communication module 930. One or more processors 910 may be provided in the device. FIG. 9 shows one processor 910 as an example. One or more memories 920 may be provided in the device. FIG. 9 shows one memory 920 as an example. The processor 910, the memory 920, and the communication module 930 in the device may be connected via a bus or in other manners. The connection via the bus is shown as an example in FIG. 9. In this embodiment, the device may be the first communication node.

As a computer-readable storage medium, the memory 920 may be configured to store software programs, computer-executable programs, and modules, such as program instructions/modules corresponding to the device of any embodiment of the present application (for example, the sender 710 in the data transmission apparatus). The memory 920 may include a program storage region and a data storage region. The program storage region may store an operating system and an application program required by at least one function. The data storage region may store data created according to the use of the device. Additionally, the memory 920 may include a high-speed random-access memory and may also include a nonvolatile memory such as at least one disk memory, a flash memory, or another nonvolatile solid-state memory. In some examples, the memory 920 may be remote from the processor 910 and connectable to the device via a network. Examples of the network include, but are not limited to, the Internet, an intranet, a local area network, a mobile communication network, and a combination thereof.

In the case where the communication device is the first communication node, the device may be configured to perform the data transmission method applied to the first communication node according to any previous embodiment and has corresponding functions and effects.

In the case where the communication device is the second communication node, the device may be configured to perform the data transmission method applied to the second communication node according to any previous embodiment and has corresponding functions and effects.

An embodiment of the present application further provides a storage medium storing computer-executable instructions which, when executed by a computer processor, cause the processor to perform a data transmission method applied to a first communication node. The method includes: sending scheduling indication information to a second communication node, where the scheduling indication information is used for indicating resource configuration information corresponding to at least two carriers; and the resource configuration information is used for indicating at least one of the following: activation of semi-persistent transmission, deactivation of semi-persistent transmission, retransmission of semi-persistent transmission, or TCI state update.

An embodiment of the present application further provides a storage medium storing computer-executable instructions which, when executed by a computer processor, cause the processor to perform a data transmission method applied to a second communication node. The method includes: receiving scheduling indication information sent by a first communication node, where the scheduling indication information is used for indicating resource configuration information corresponding to at least two carriers; and the resource configuration information is used for indicating at least one of the following: activation of semi-persistent transmission, deactivation of semi-persistent transmission, retransmission of semi-persistent transmission, or TCI state update; and configuring first feedback resource corresponding to HARQ feedback information or sending the PUSCH according to the scheduling indication information.

It is to be understood by those skilled in the art that the term "user equipment" encompasses any suitable type of wireless user equipment, for example, a mobile phone, a portable data processing apparatus, a portable web browser, or a vehicle-mounted mobile station.

Generally speaking, embodiments of the present application may be implemented in hardware or special-purpose circuits, software, logic, or any combination thereof. For example, some aspects may be implemented in hardware while other aspects may be implemented in firmware or software executable by a controller, a microprocessor, or another computing apparatus, though the present application is not limited thereto.

Embodiments of the present application may be implemented through the execution of computer program instructions by a data processor of a mobile apparatus, for example, implemented in a processor entity, by hardware, or by a combination of software and hardware. The computer program instructions may be assembly instructions, instruction set architecture (ISA) instructions, machine instructions, machine-related instructions, microcodes, firmware instructions, status setting data, or source or object codes written in any combination of one or more programming languages.

A block diagram of any logic flow among the drawings of the present application may represent program steps, may represent interconnected logic circuits, modules, and functions, or may represent a combination of program steps and logic circuits, modules, and functions. Computer programs may be stored in a memory. The memory may be of any type suitable for a local technical environment and may be implemented using any suitable data storage technology, such as, but not limited to, a read-only memory (ROM), a random-access memory (RAM), or an optical memory device and system (for example, a digital video disc (DVD) or a compact disc (CD)). Computer-readable media may include non-transitory storage media. The data processor may be of any type suitable for the local technical environment, such as, but not limited to, a general-purpose computer, a special-purpose computer, a microprocessor, a digital signal processor (DSP), an application-specific integrated circuit (ASIC), a field-programmable gate array (FPGA), and a processor based on a multi-core processor architecture.

**Claims**

1. A data transmission method, the method being applied to a first communication node and comprising:

   sending scheduling indication information to a second communication node, wherein the scheduling indication information is used for indicating resource configuration information corresponding to at least two carriers; and the resource configuration information is used for indicating at least one of the following: activation of semi-persistent transmission, deactivation of semi-persistent transmission, retransmission of semi-persistent transmission, or transmission configuration indication (TCI) state update.

2. The method of claim 1, wherein the resource configuration information comprises at least one of the following parameters: a bandwidth part (BWP) indication, a new data indicator (NDI), a redundancy version (RV), a hybrid automatic repeat request (HARQ) process number (HPN), a Modulation and Coding Scheme (MCS), a frequency domain resource allocation (FDRA) field, or a time domain resource allocation (TDRA) field.

3. The method of claim 1, wherein Cyclic Redundancy Check (CRC) of the scheduling indication information is scrambled by a first Radio Network Temporary Identifier (RNTI); and
   when the scheduling indication information is used for scheduling downlink transmission resources, the scheduling indication information is used for at least one of the following operations: activating semi-persistent scheduling physical downlink shared channel (SPS PDSCH) transmission, deactivating the SPS PDSCH transmission, scheduling Physical Downlink Shared Channel (PDSCH) retransmission, indicating a TCI state update for a carrier, or indicating that no transmission exists on a carrier.

4. The method of claim 3, wherein when the scheduling indication information is used for activating the SPS PDSCH transmission of the carrier, an NDI, RV, or HPN of the carrier is set to a first predefined value.

5. The method of claim 3, wherein when the scheduling indication information is used for deactivating the SPS PDSCH transmission of the carrier, an NDI, RV, or HPN of the carrier is set to a first predefined value, an MCS of the carrier is set to a second predefined value, and an FDRA of the carrier is set to a third predefined value.

6. The method of claim 3, wherein when the scheduling indication information is used for indicating the PDSCH retransmission of the carrier, an NDI of the carrier is set to a second predefined value.

7. The method of claim 3, wherein when the scheduling indication information is used for indicating the TCI state update for the carrier, an NDI of the carrier is set to a first predefined value, an RV or MCS of the carrier is set to a second predefined value, and an FDRA of the carrier is set to a third predefined value.

8. The method of claim 3, wherein when the scheduling indication information is used for indicating that no transmission exists on the carrier, an FDRA of the carrier is set to a third predefined value, an NDI, RV, HPN, and MCS of the carrier are each set to a fourth predefined value, and the fourth predefined value is different from predefined values for SPS PDSCH activation, SPS PDSCH deactivation, SPS PDSCH retransmission, and the TCI state update.

9. The method of claim 1, further comprising:
   receiving HARQ feedback information sent by the second communication node on a first feedback resource, wherein a time domain position of the first feedback resource is determined by a first time domain position and a first time domain interval, and the first time domain interval is indicated by the scheduling indication information or configured by the first communication node.

10. The method of claim 9, wherein the first time domain position comprises at least one of the following: a time domain position of an SPS PDSCH with a latest ending symbol among at least one activated SPS PDSCH, a time domain position of an SPS PDSCH with a latest ending symbol among at least one deactivated SPS PDSCH, a time domain position of a PDSCH with a latest ending symbol among at least one scheduled PDSCH, or a time domain position of the scheduling indication information.

11. The method of claim 9, wherein when the scheduling indication information is used for deactivating SPS PDSCH transmission of at least one carrier, a position of the HARQ feedback information in a first type codebook is determined by at least one of an SPS PDSCH with a smallest carrier index among deactivated SPS PDSCHs or a time domain position of the scheduling indication information.

12. The method of claim 9, wherein when the scheduling indication information is used for deactivating SPS PDSCH transmission of at least one carrier, a position of the HARQ feedback information in a first type codebook is determined by a time domain position of a PDSCH on a carrier with a smallest carrier index among at least one deactivated carrier, wherein the PDSCH on the carrier with the smallest carrier index is indicated by a TDRA field in the scheduling indication information.

13. The method of claim 9, wherein a first type codebook is generated using a pre-expanded time domain interval set.

14. The method of claim 9, wherein for a second type codebook, the scheduling indication information is used for indicating a counter downlink assignment index (DAI) and a total DAI;

   the HARQ feedback information is generated according to an order of the counter DAI;
   the counter DAI is a cumulative number of pieces of scheduling indication information up to a current Physical Downlink Control Channel (PDCCH) detection occasion and a current carrier or a cumulative number of combinations of the scheduling indication information and carriers; and
   the total DAI is a total number of pieces of scheduling indication information up to the current PDCCH detection occasion or a total number of combinations of the scheduling indication information and the carriers.

15. The method of claim 14, wherein in a case where the scheduling indication information schedules at least one carrier and any one of the at least one carrier corresponds to an activated SPS PDSCH or no transmission, the scheduling indication information is skipped when the counter DAI or the total DAI is counted.

16. The method of claim 14, wherein for the second type codebook, when the scheduling indication information deactivates an SPS PDSCH of a carrier, schedules SPS PDSCH retransmission, or indicates a TCI state update for a carrier and the at least two carriers exist, the counter DAI or the total DAI is counted into a sub-codebook for the scheduling indication information scheduling a plurality of PDSCHs; and
   when one carrier exists, the counter DAI or the total DAI is counted into a sub-codebook for the scheduling indication information scheduling one PDSCH.

17. The method of claim 1, wherein when the scheduling indication information is used for scheduling uplink transmission resources, the scheduling indication information is used for at least one of the following operations: activating configured grant physical uplink shared channel (CG PUSCH) transmission, deactivating the CG PUSCH transmission, scheduling CG PUSCH retransmission, or indicating that no transmission exists on a carrier.

18. A data transmission method, the method being applied to a second communication node and comprising:

receiving scheduling indication information sent by a first communication node, wherein the scheduling indication information is used for indicating resource configuration information corresponding to at least two carriers; and the resource configuration information is used for indicating at least one of the following: activation of semi-persistent transmission, deactivation of semi-persistent transmission, retransmission of semi-persistent transmission, or transmission configuration indication (TCI) state update; and

configuring first feedback resource corresponding to hybrid automatic repeat request (HARQ) feedback information or sending a Physical Uplink Shared Channel (PUSCH) according to the scheduling indication information.

19. The method of claim 18, wherein Cyclic Redundancy Check (CRC) of the scheduling indication information is scrambled by a first Radio Network Temporary Identifier (RNTI); and

when the scheduling indication information is used for scheduling downlink transmission resources, the scheduling indication information is used for at least one of the following operations: activating semi-persistent scheduling physical downlink shared channel (SPS PDSCH) transmission, deactivating the SPS PDSCH transmission, scheduling Physical Downlink Shared Channel (PDSCH) retransmission, indicating a TCI state update for a carrier, or indicating that no transmission exists on a carrier.

20. The method of claim 18, further comprising:

sending the HARQ feedback information to the second communication node on the first feedback resource, wherein a time domain position of the first feedback resource is determined by a first time domain position and a first time domain interval, and the first time domain interval is indicated by the scheduling indication information or configured by the first communication node.

21. The method of claim 20, wherein the first time domain position comprises at least one of the following: a time domain position of an SPS PDSCH with a latest ending symbol among at least one activated SPS PDSCH, a time domain position of an SPS PDSCH with a latest ending symbol among at least one deactivated SPS PDSCH, a time domain position of a PDSCH with a latest ending symbol among at least one scheduled PDSCH, or a time domain position of the scheduling indication information.

22. The method of claim 20, wherein when the scheduling indication information is used for deactivating SPS PDSCH transmission of at least one carrier, a position of the HARQ feedback information in a first type codebook is determined by at least one of an SPS PDSCH with a smallest carrier index among deactivated SPS PDSCHs or a time domain position of the scheduling indication information.

23. The method of claim 20, wherein when the scheduling indication information is used for deactivating SPS PDSCH transmission of at least one carrier, a position of the HARQ feedback information in a first type codebook is determined by a time domain position of a PDSCH on a carrier with a smallest carrier index among at least one deactivated carrier, wherein the PDSCH on the carrier with the smallest carrier index is indicated by a time domain resource allocation (TDRA) field in the scheduling indication information.

24. The method of claim 20, wherein a first type codebook is generated using a pre-expanded time domain interval set.

25. The method of claim 20, wherein for a second type codebook, the scheduling indication information is used for indicating a counter downlink assignment index (DAI) and a total DAI;

the HARQ feedback information is generated according to an order of the counter DAI;
the counter DAI is a cumulative number of pieces of scheduling indication information up to a current Physical Downlink Control Channel (PDCCH) detection occasion and a current carrier or a cumulative number of combinations of the scheduling indication information and carriers; and
the total DAI is a total number of pieces of scheduling indication information up to the current PDCCH detection occasion or a total number of combinations of the scheduling indication information and the carriers.

26. The method of claim 25, wherein in a case where the scheduling indication information schedules one or more carriers and any one of the one or more carriers corresponds to an activated SPS PDSCH or no transmission, the scheduling indication information is skipped when the counter DAI or the total DAI is counted.

27. The method of claim 25, wherein for the second type codebook, when the scheduling indication information deactivates an SPS PDSCH of a carrier, schedules SPS PDSCH retransmission, or indicates a TCI state update for a carrier and the at least two carriers exist, the counter DAI or the total DAI is counted into a sub-codebook for the scheduling indication information scheduling a plurality of PDSCHs; and
when one carrier exists, the counter DAI or the total DAI is counted into a sub-codebook for the scheduling indication information scheduling one PDSCH.

28. The method of claim 18, wherein when the scheduling indication information is used for scheduling uplink transmission resources, the scheduling indication information is used for at least one of the following operations: activating configured grant physical uplink shared channel (CG PUSCH) transmission, deactivating the CG PUSCH transmission, scheduling CG PUSCH retransmission, or indicating that no transmission exists on a carrier.

29. A communication device, comprising a memory and at least one processor;

wherein the memory is configured to store at least one program; and
the at least one processor is configured to perform the data transmission method of any one of claims 1 to 17 or the data transmission method of any one of claims 18 to 28 when executing the at least one program.

30. A computer-readable storage medium configured to store at least one computer program which, when executed by at least one processor, causes the at least one processor to perform the data transmission method of any one of claims 1 to 17 or the data transmission method of any one of claims 18 to 28.

Send scheduling indication information to a second communication node, where the scheduling indication information is used for indicating resource configuration information corresponding to at least two carriers; and the resource configuration information is used for indicating at least one of the following: activation of semi-persistent transmission, deactivation of semi-persistent transmission, retransmission of semi-persistent transmission, or TCI state update    S110

**FIG. 1**

Receive scheduling indication information sent by a first communication node, where the scheduling indication information is used for indicating resource configuration information corresponding to at least two carriers; and the resource configuration information is used for indicating at least one of the following: activation of semi-persistent transmission, deactivation of semi-persistent transmission, retransmission of semi-persistent transmission, or TCI state update    S210

Configure first feedback resource corresponding to HARQ feedback information or send the PUSCH according to the scheduling indication information    S220

**FIG. 2**

| Cell 1 | | | PDSCH 1 | | | |

**FIG. 3**

| Cell 1 | DCI 1 | | | | | |

**FIG. 4**

Cell 1

| | | SPS | | | |
|---|---|---|---|---|---|

Cell 2

| | | | SPS | | |
|---|---|---|---|---|---|

Cell 3

| DCI 3 | | | | SPS 2 | |
|---|---|---|---|---|---|

Cell 4

| slot 1 | slot 2 | SPS  slot 3 | slot 4 | slot 5 | PUCCH  slot 6 |
|---|---|---|---|---|---|

**FIG. 5**

Cell 1

| | DCI 1 | | | | |
|---|---|---|---|---|---|

Cell 2

| DCI 2 | DCI 5 | | | | |
|---|---|---|---|---|---|

Cell 3

| DCI 3 | DCI 6 | | | | |
|---|---|---|---|---|---|

Cell 4

| DCI 4  slot 1 | slot 2 | slot 3 | slot 4 | slot 5 | PUCCH  slot 6 |
|---|---|---|---|---|---|

**FIG. 6**

**FIG. 7**

**FIG. 8**

Communication device

920

Memory

930

Communication
module

Processor

910

**FIG. 9**

## INTERNATIONAL SEARCH REPORT

International application No.

**PCT/CN2024/120519**

### A. CLASSIFICATION OF SUBJECT MATTER

H04W 72/232(2023.01)i; H04W72/0453(2023.01)i

According to International Patent Classification (IPC) or to both national classification and IPC

### B. FIELDS SEARCHED

Minimum documentation searched (classification system followed by classification symbols)

IPC:H04W

Documentation searched other than minimum documentation to the extent that such documents are included in the fields searched

Electronic data base consulted during the international search (name of data base and, where practicable, search terms used)

CNTXT, CNKI, ENTXTC, 3GPP: 调度, 指示, 两个, 多, 载波, 资源, 配置, 半持续, 半永久, 半静态, 传输, 激活, 去激活, 重传, 传输配置指示, 状态, 更新, schedule, indicate, two, multiple, carrier, resource, configuration, semi persistent, semi static, transmission, activate, deactivate, retransmission, transmission configuration indication, state, update

### C. DOCUMENTS CONSIDERED TO BE RELEVANT

| Category* | Citation of document, with indication, where appropriate, of the relevant passages | Relevant to claim No. |
|---|---|---|
| PX | CN 117939673 A (ZTE CORP.) 26 April 2024 (2024-04-26)<br>claims 1-30 | 1-30 |
| X | CN 113708899 A (VIVO MOBILE COMMUNICATION CO., LTD.) 26 November 2021 (2021-11-26)<br>description, paragraphs [53]-[209] | 1-30 |
| X | CN 111093271 A (ZTE CORP.) 01 May 2020 (2020-05-01)<br>description, paragraphs [39]-[113] | 1-30 |
| X | WO 2019028890 A1 (GUANGDONG OPPO MOBILE TELECOMMUNICATIONS CORP., LTD.) 14 February 2019 (2019-02-14)<br>description, page 6, line 17 to page 12, line 10 | 1-30 |
| X | WO 2021227624 A1 (DATANG MOBILE COMMUNICATIONS EQUIPMENT CO., LTD.) 18 November 2021 (2021-11-18)<br>description, paragraphs [77]-[84] | 1-30 |

☑ Further documents are listed in the continuation of Box C. ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
|---|---|
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **30 December 2024** | **31 December 2024** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT

| International application No. |
|---|
| **PCT/CN2024/120519** |

### C. DOCUMENTS CONSIDERED TO BE RELEVANT

| Category* | Citation of document, with indication, where appropriate, of the relevant passages | Relevant to claim No. |
|---|---|---|
| A | CN 110278062 A (TELECOMMUNICATION SCIENCE AND TECHNOLOGY RESEARCH INSTITUTE CO., LTD.) 24 September 2019 (2019-09-24) entire document | 1-30 |
| A | NTT DOCOMO, INC. ""R1-1906219"" *3GPP tsg_ran\wg1_rl1*, 04 May 2019 (2019-05-04), entire document | 1-30 |

Form PCT/ISA/210 (second sheet) (July 2022)

**INTERNATIONAL SEARCH REPORT**
Information on patent family members

International application No.

**PCT/CN2024/120519**

| Patent document cited in search report | | | Publication date (day/month/year) | Patent family member(s) | | | Publication date (day/month/year) |
|---|---|---|---|---|---|---|---|
| CN | 117939673 | A | 26 April 2024 | None | | | |
| CN | 113708899 | A | 26 November 2021 | None | | | |
| CN | 111093271 | A | 01 May 2020 | WO | 2021018196 | A1 | 04 February 2021 |
| WO | 2019028890 | A1 | 14 February 2019 | None | | | |
| WO | 2021227624 | A1 | 18 November 2021 | None | | | |
| CN | 110278062 | A | 24 September 2019 | WO | 2019174486 | A1 | 19 September 2019 |

Form PCT/ISA/210 (patent family annex) (July 2022)